(19) Europäisches Patentamt / European Patent Office / Office européen des brevets

(11) **EP 4 534 193 B1**

(12) **EUROPÄISCHE PATENTSCHRIFT**

(45) Veröffentlichungstag und Bekanntmachung des Hinweises auf die Patenterteilung:
**08.07.2026   Patentblatt 2026/28**

(21) Anmeldenummer: **23201769.9**

(22) Anmeldetag: **05.10.2023**

(51) Internationale Patentklassifikation (IPC):
**B01J 8/12** (2006.01)    **C10G 11/18** (2006.01)
**G01N 31/10** (2006.01)

(52) Gemeinsame Patentklassifikation (CPC):
**B01J 8/12; C10G 1/008; C10G 1/10; C10G 3/55; C10G 3/60; C10G 11/187; G01N 31/10;** B01J 8/002; B01J 8/003; B01J 8/0035; B01J 8/0045; B01J 8/005; B01J 8/1818; B01J 2219/00747

(54) **VORRICHTUNG ZUR UNTERSUCHUNG VON CHEMISCHEN PROZESSEN IN EINEM FLUGSTROMREAKTOR**

DEVICE FOR ANALYSING CHEMICAL PROCESSES IN AN ENTRAINED-FLOW REACTOR

DISPOSITIF POUR L'ANALYSE DE PROCESSUS CHIMIQUES DANS UN RÉACTEUR À ÉCOULEMENT EN VOL

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**09.04.2025   Patentblatt 2025/15**

(73) Patentinhaber: **HTE GmbH The High Throughput Experimentation Company
69123 Heidelberg (DE)**

(72) Erfinder:
• **WODARZ, Simon
  81479 Muenchen (DE)**
• **WARNECKE, Alec
  69123 Heidelberg (DE)**
• **IGNATZEK, Karol
  69123 Heidelberg (DE)**
• **HILPERT, Felix
  69123 Heidelberg (DE)**
• **FRIESS, Markus
  69123 Heidelberg (DE)**

(74) Vertreter: **BASF IP Association
BASF SE
GBI - Z078
67056 Ludwigshafen (DE)**

(56) Entgegenhaltungen:
WO-A1-2019/020655    WO-A1-2021/074407
WO-A1-2021/213974

**Beschreibung**

Die vorliegende Erfindung betrifft die Weiterentwicklung einer Vorrichtung und eines Verfahrens zur Untersuchung von FCC- oder anderen Fluid-Katalysatoren und chemischen Prozessen im Flugstrom im Bereich zwischen Labor- und Technikumsmaßstab.

Das Fluid Catalytic Cracking (FCC) bildet seit vielen Jahrzehnten eine der Schlüsseltechnologien bei der industriellen Verarbeitung von Erdölen und Erdölkomponenten. Eine Verbesserung und Weiterentwicklung derartiger Verfahren ist von großem Interesse, um die $CO_2$-Emissionen der etablierten Prozesse zu senken. Weitere Ziele sind die Aufarbeitung von Restprodukten aus der Erdölindustrie oder auch die Aufarbeitung von Abfallprodukten zu Wertprodukten in einer zukünftigen Kreislaufwirtschaft sowie eine dahingehende Anpassung und Optimierung der Verfahren, dass bei der Produktzusammensetzung diejenigen Zielkomponenten mit hoher Ausbeute hergestellt werden, die in den Prozessketten der unterschiedlichen lokalen Betriebsstätten jeweils benötigt werden. Beispielsweise wird die Transformation im Bereich der Automobilindustrie von Verbrennungsmotoren hin zu neuen Antriebssystemen dazu führen, dass die Bedeutung der Produktion von Kraftstoffen abnehmen und gleichzeitig die Bedeutung der Produktion an Basischemikalien steigen wird.

Großtechnische FCC-Anlage haben Katalysatorfassungsvermögen, welche im Bereich von etwa 30 bis 1200 t liegen. In einer FCC-Anlage befindet sich der Katalysator in einem Kreislaufprozess, wobei die Funktionselemente der FCC-Anlage einen Regenerator, einen aufwärts transportierenden Flugstrom-Reaktor (der nachfolgend auch als Riser-Reaktor oder als Riser bezeichnet wird) und einen Stripper umfassen. Die Funktionselemente sind in der Weise mit Prozesskomponenten verbunden, dass kontinuierlich Katalysator vom Regenerator zum Eingang des Riser-Reaktors befördert wird, wo gleichzeitig Feed gemeinsam mit Dampf in den Riser-Reaktor injiziert werden. Aufgrund der Prozessbedingungen bildet sich eine hohe Gasströmungsgeschwindigkeit, die das Gemisch aus Katalysator und Feed innerhalb von wenigen Sekunden stromaufwärts durch den Riser-Reaktor befördert, wo die chemischen Komponenten zur Reaktion gebracht werden. Im Laufe der Prozessentwicklung der vergangenen Jahrzehnte wurden die Kontaktzeiten zwischen Katalysator und chemischen Komponenten im Riser-Reaktor beim Betrieb der FCC-Anlage immer weiter verkürzt. Bei den heutigen FCC-Anlagen liegen die Verweilzeiten eines FCC-Katalysators im Riser-Reaktor im Bereich von 2 bis 3 Sekunden. Die im Reaktor ablaufenden CrackReaktionen sind endotherm, so dass die Temperatur am Eingang des Riser-Reaktors gegenüber der Temperatur am Ausgang des Riser-Reaktors um 100 bis 200 K höher liegt. Falls die Eingangstemperatur im Riser beispielsweise bei 670 °C liegt, so kann die Ausgangtemperatur bei 530 °C liegen.

Es existieren bereits eine große Anzahl an unterschiedlichen Apparaturen zur Untersuchung von FCC-Katalysatoren im Labor- und Technikumsmaßstab. Die unterschiedlichen Apparaturen sind durch unterschiedliche Typen von Reaktoren und Mengen an Katalysatoren gekennzeichnet, die für die Untersuchung eingesetzt werden. Beschreibungen zu diesen Vorrichtungen und Verfahren sind in der Fachliteratur veröffentlicht und werden beispielsweise in der WO 2019/020655 A1 oder in Catal. Today 218-219 (2013), pp. 107-114 gegeben.

Eine Apparatur zur Untersuchung von FCC-Katalysatoren, die sich in den vergangenen zwei Jahrzehnten im Markt etabliert hatte, wurde von John Kayser unter dem Markennamen ACE™ (die Abkürzung bedeutet Advanced Cracking Evaluation) verkauft. Der in der ACE-Apparatur eingesetzte Reaktor, der im US-Patent US 6,069,012 beschrieben wird, ermöglicht die Durchführung der katalytischen Tests in einem statisch fluidisierten Katalysatorbett.

Sowohl in der US 7,378,059 B1 als auch in der WO 2019/020655 A1 werden Vorrichtungen mit stromabwärts transportierenden Reaktoren offenbart, durch die ein FCC-Katalysator von einem Hopper zu einem Separator geleitet wird, wobei den Reaktoren ein Feed hinzugefügt wird, das mit dem eingeleiteten Katalysator zur Reaktion gebracht wird. WO2021/213974 offenbart eine Vorrichtung zur Untersuchung von heterogen katalysierten Reaktionen.

Eine der Aufgaben, die der Erfindung zugrunde liegt, ist es eine Vorrichtung und ein Verfahren zur Untersuchung von FCC- oder anderen Fluid-Katalysatoren und Prozessen bereitzustellen, die eine verbesserte Untersuchung gegenüber dem Stand der Technik ermöglichen. Eine weitere Aufgabe war es, ein Verfahren bereitzustellen, das strapazierfähig ist und eine Kontrolle von unterschiedlichen Prozessparametern ermöglicht. Gleichzeitig soll das erfindungsgemäße Verfahren nach Möglichkeit auch automatisch ablaufen.

Die erfindungsgemäß genannte Aufgabe und weitere Aufgaben, die nicht genannt werden, werden dadurch gelöst, dass eine Vorrichtung und ein Verfahren zur Untersuchung von chemischen Prozessen bereitgestellt werden, wobei die Vorrichtung einen Hopper 11, einen Flugstromreaktor 13, verknüpft durch eine Verbindung 9 mit dem Hopper 11 und durchströmbar für aus dem Hopper 11 kommendem partikelförmigem Material, und eine Eduktzufuhr 19 sowie eine Mess- und Regeleinrichtung umfasst, wobei stromab des Flugstromreaktors 13 ein Separator 17 zur Abtrennung des partikelförmigen Materials von einem kondensierbare Dämpfe enthaltenden Reaktionsprodukt angeordnet ist und stromab des Separators 17 ein Probengefäß 63 zur Aufnahme von Reaktionsprodukt, wobei die Vorrichtung dadurch gekennzeichnet ist, dass die Verbindung 9 von Hopper 11 mit dem Flugstromreaktor 13 eine Kompensationsgaszufuhr 21 mit einem Differenzflussregler 25 umfasst, der mit der Mess- und Regeleinrichtung der Vorrichtung in der Weise gekoppelt ist, dass die Flussströme der zugeführten und abgeleiteten Gasströme durch die Mess- und Regeleinrichtung erfasst und durch die Kompensationsgaszufuhr 21 ausgeglichen werden können.

In einer bevorzugten Ausführungsform der Vorrichtung sind stromab des Separators 17 ein Flüssigkeitsabscheider zur Abtrennung von flüssigen Bestandteilen angeordnet und stromab des Flüssigkeitsabscheiders 27 das Probengefäß 63 angeordnet. Mittels dieser bevorzugten Ausführungsform könne die kondensierbaren Dämpfe im Flüssigkeitsabscheider aufgefangen werden.

In einer weiter bevorzugten Ausführungsform der Vorrichtung ist die Kompensationsgaszufuhr mit einem Drucksensor 35 verbunden, wobei stromab des Flüssigkeitsabscheiders 27 oder stromab des Separators 17, sofern die Vorrichtung keinen Flüssigkeitsabscheider 27 aufweist, ein Druckregelventil 31 angeordnet ist, weiter vorzugsweise ist das Druckregelventil 31 mit dem Drucksensor 35 verbunden, wobei es bevorzugt ist, dass der Messwert des Drucksensors 35 zur Regelung des Druckregelventils 31 dient. Mittels des Druckregelventils 31 und der besagten Anordnung lässt sich die Vorrichtung bei unterschiedlichen Drücken beziehungsweise Druckniveaus betreiben, wobei die Drücke während des Betriebs der Vorrichtung angepasst werden können. Die Anpassung des Druckregelventils hat den Vorteil, dass hier die Druckänderungen abgefangen werden können, die beispielsweise bei Prozessen entstehen, die mit Stoffmengenänderungen verbunden sind, wobei diese mit Volumenänderungen einhergehen.

Bei der erfindungsgemäßen Vorrichtung, die einen Flugstromreaktor 13 umfasst, werden die Fluss- und Regelparameter von einer Programmsteuerung erfasst und in Beziehung gesetzt. Störeinflüsse, die durch systembedingte oder prozessbedingte Schwankungen verursacht werden, werden von der Programmsteuerung erfasst und werden durch die Einspeisung eines Ausgleichsgases mittels einer Kompensationsgaszufuhr 21 ausgeglichen. Die Erfassung der Flussströme und Anpassung durch die Kompensationsgaszufuhr 21 erfolgt in Echtzeit. Echtzeit bedeutet, dass die Zeitdauer von Datenerfassung und der Anpassung durch die Einspeisung von Kompensationsgas $\leq 2$ Sekunden beträgt, weiter vorzugsweise beiträgt die Zeitdauer $\leq 1{,}5$ Sekunden, darüber hinaus bevorzugt $\leq 1{,}0$ Sekunden, ganz besonders bevorzugt $\leq 0{,}75$ Sekunden. Eine geeignete Versuchsdauer beträgt vorzugsweise 30 bis 300 Sekunden, weiter vorzugsweise beträgt eine geeignete Versuchsdauer 30 bis 180 Sekunden, darüber hinaus bevorzugt 30 bis 90 Sekunden, ganz bevorzugt 30 bis 60 Sekunden. Die Anpassung der Kompensationsgaszufuhr in Echtzeit bedeutet, dass mehrmals über die Versuchsdauer der zudosierte Flussstrom an Kompensationsgas geregelt wird, und zwar im Sekundentakt oder im Bruchteil von Sekunden. In einer bevorzugten Ausführungsform führt dies dazu, dass der Partialdruck des zu dosierenden Feeds auf einen Zielwert eingestellt werden kann und dadurch zeitlich nahezu konstant gehalten werden kann. In einer bevorzugten Ausführungsform des erfindungsgemäßen Verfahrens wird der Partialdruck des zu dosierenden Eduktfluids auf der Basis unterschiedlicher Stoffströme berechnet, wobei die unterschiedlichen Stoffströme zumindest teilweise durch die Messsensoren erfasst werden. Für die Bestimmung des Partialdrucks des zu dosierenden Feeds $p_{\text{Feed}}$ kann der physikalische Zusammenhang verwendet werden, der durch Gleichung 1 wiedergegeben wird. Der Stoffmengenanteil des Feeds $y_{\text{Feed}}$ wird berechnet und der Gesamtdruck $p$ wird gemessen. Dabei ist es bevorzugt, dass der Stoffmengenanteil aus der Summe aller molarer Reaktoreingangsströme $\sum \dot{n}_i$, dem Feedmassenstrom $\dot{m}_{\text{Feed}}$ und der mittleren molaren Masse des Feeds $\tilde{M}_{\text{Feed}}$ bestimmt beziehungsweise berechnet wird. Es kann sich um vom Benutzer voreingestellte Werte handeln, die bekannt sind, oder um diejenigen Messwerte, die auf der Basis der Erfindung bestimmt werden. Das bedeutet, die Messgrößen, die durch Verwendung der erfindungsgemäßen Vorrichtung und bei Durchführung des erfindungsgemäßen Verfahrens bestimmt werden.

$$p_{\text{Feed}} = y_{\text{Feed}} \cdot p = p \cdot \frac{\dot{m}_{\text{Feed}}/\tilde{M}_{\text{Feed}}}{\sum \dot{n}_i} \qquad \text{Gleichung 1}$$

Dabei wird der Partialdruck durch Amplituden von Schwankungen in Druck und Stoffmengenanteil sowie durch Frequenz beziehungsweise Dauer derartiger Schwankungen charakterisiert. Den Partialdruck zeitlich nahezu konstant halten bedeutet, dass die Schwankungen von Druck und Stoffmengenanteil im Bereich < 500 mbar beziehungsweise < 10 % sind, vorzugsweise im Bereich < 250 mbar beziehungsweise < 5 %, darüber hinaus bevorzugt im Bereich < 150 mbar beziehungsweise < 3 %, insbesondere bevorzugt im Bereich < 100 mbar beziehungsweise < 2 %. Weiter vorzugsweise ist die Dauer der Schwankungen in Druck und Konzentration $\leq 15$ s, insbesondere bevorzugt ist die Dauer der Schwankungen $\leq 10$ s und noch weiter bevorzugt ist die Dauer der Schwankungen $\leq 5$ s.

Die erfindungsgemäße Vorrichtung und das erfindungsgemäße Verfahren ermöglichen eine verbesserte Nachstellung der Prozessbedingungen, die in großtechnischen Prozessen mit Flugstromreaktoren und insbesondere FCC-Anlagen vorliegen, gegenüber den Vorrichtungen und Verfahren, die aus dem Stand der Technik bekannt sind. Die Erfindung bietet den Vorteil, dass die Prozessentwicklung seitens der Raffinerien und der chemischen Industrie vereinfacht wird, da Zeit und Kosten bei einer Aufskalierung in der Prozessentwicklung eingespart werden können. Dadurch lässt sich Energie einsparen und die $CO_2$-Emissionen, die bei der Prozessentwicklung auftreten, können reduziert werden. Es ist völlig unerwartet und somit auch überraschend, dass die Leistungseigenschaften der Vorrichtung und des Verfahrens wie vorliegend beschrieben gegenüber den aus dem Stand der Technik bekannten Vorrichtungen weiter verbessert werden konnten. Die erfindungsgemäße Vorrichtung und das Verfahren weisen eine hohe Komplexität auf, was die Steuerung und Regelung betreffen. Der Vorteil ist, dass die mittels der Vorrichtung und dem Verfahren erzielten Messdaten in besserer Übereinstimmung mit denjenigen Messdaten liegen, die mittels Pilotanlagen erzielt werden können. Zu beachten ist, dass Pilotanlagen in der Regel Riser-Reaktoren umfassen und zum Betrieb ein viel größere Menge an Katalysator erfordern als es zum Betrieb der erfindungsgemäßen Vorrichtung und des erfindungsgemäßen Verfahrens notwendig ist. Beispielsweise ist für den Betrieb einer Pilotanlage mit einem kleinen Riser-Reaktor eine Katalysatormenge im Bereich von 5 Kilogramm Katalysator notwendig. Beim Betrieb der erfindungsgemäßen Vorrichtung sind Katalysatormengen im Bereich von 50 bis 150 g notwendig. Somit ist es mittels der erfindungsgemäßen Vorrichtung möglich, die Messungen mit nur einem Fünfzigstel der Katalysatormenge durchzuführen, die für die Durchführung der Untersuchung mittels Pilotanlage notwendig ist. Gleichzeitig kann die Dauer der Versuchsdurchführung signifikant gegenüber dem Betrieb einer Pilotanlage verkürzt werden. Der Betrieb einer Pilotanlage erfordert einen wesentlich größeren Betriebs- und Energieaufwand sowie auch einen viel größeren Materialeinsatz in Bezug auf Feststoffkatalysator und Feeds gegenüber dem Betrieb der erfindungsgemäßen Vorrichtung.

In Bezug auf den Flugstromreaktor 13 ist zu sagen, dass es sich hierbei vorzugsweise um einen Rohrreaktor handelt. Vorzugsweise ist der Flugstromreaktor 13 vertikal angeordnet, wobei die Längsachse des Reaktionsrohrs senkrecht in Bezug auf horizontale Ebene steht. Die senkrechte Anordnung bedeutet, dass die Ausführbarkeit der Erfindung in keiner Weise dadurch eingeschränkt wird, dass die Längsachse des Reaktors in einem bestimmten Winkel von der vertikalen Orientierung abweicht. Denkbar ist, dass die Längsachse des Flugstromreaktor 13 Abweichungen gegenüber der vertikalen Orientierung aufweisen kann, die bis zu 45 Grad betragen. Vorzugsweise ist die Abweichung jedoch kleiner als 30 Grad, weiter vorzugsweise kleiner als 10 Grad und insbesondere kleiner als 5 Grad. Vorzugsweise handelt es sich bei dem Flugstromreaktor 13 um einen zylinderförmigen Rohrreaktor, der eine Länge im Bereich von 0,3 - 3 m, weiter vorzugsweise von 0,5 - 2,5 m, aufweist. Vorzugsweise liegt der Durchmesser des Reaktors im Bereich von 0,3 - 10 cm, weiter vorzugsweise im Bereich von 0,5 - 5 cm und insbesondere vorzugweise im Bereich von 0,6 - 2 cm. In weiteren Ausführungsformen ist auch eine schraubenförmig absteigend gewundene Ausbildung des Reaktionsrohrs zu nennen.

Der für die Lagerung und Dosierung eingesetzte Hopper 11 weist vorzugsweise ein Fassungsvermögen an Katalysator im Bereich von 0,1 bis 5 Liter auf, weiter vorzugsweise ist das Fassungsvermögen an Katalysator im Bereich von 0,2 bis 3,5 Liter. Im Fall von FCC-Katalysator liegt die Schüttdichte im Bereich von ca. 0,9 g/cm$^3$. Daher können vom Hopper 11 - je nach der Auslegung des Behälters - etwa 0,1 - 4,5 kg aufgenommen werden. Die Dauer der Katalysatorzuführung liegt im Bereich von etwa 60 Sekunden, wobei die Katalysatordosierrate vorzugsweise im Bereich von 30 - 150 g/min liegt. Die Verwendung eines Hoppers mit einem größeren Fassungsvermögen bietet den Vorteil, dass das bei der Durchführung des Verfahrens eine größere Anzahl von Wiederholungen vorgenommen werden kann, ohne dass der Hopper aufgefüllt werden muss. Somit kann der Betrieb des Verfahrens ohne Unterbrechungen vorgenommen werden, wenn der Einfluss von unterschiedliche Prozessbedingungen untersucht werden soll.

Die Begriffe Hopper und Katalysatorvorlagebehälter werden gleichbedeutend verwendet. In einer bevorzugten Ausführungsform der erfindungsgemäßen Vorrichtung ist der Hopper so ausgerüstet, dass das im Hopper befindliche partikelförmige Material im fluidisierten Zustand gelagert wird. Durch den fluidisierten Zustand befindet sich das Katalysatorbett in einer Bewegung, wodurch eine homogene Wärmeverteilung bei der Temperatur des Katalysatorbetts erreicht werden kann. In einer bevorzugten Ausführungsform weist der untere Teil des Hoppers 11 ein trichterförmiges Element 12 auf, weiter vorzugsweise umfasst das trichterförmige Element 12 einen porösen Bereich, durch den Gas in den Hopper eingeführt werden kann, welches eine Fluidisierung des im Hopper 11 enthaltenen partikelförmigen Materials bewirkt, weiter vorzugsweise weist der Hopper 11 ein Innenvolumen auf, das im Bereich von 0,5 bis 10 L liegt, darüber hinaus bevorzugt liegt das Volumen im Bereich von 0,5 bis 5 L. Die Fluidisierung ist von Vorteil, um eine gleichmäßige Temperierung des Katalysators beziehungsweise des partikelförmigen Materials zu erreichen. Eine Durchmischung des Katalysators beziehungsweise des partikelförmigen Materials im Hopper ist zweckmäßig, um Temperaturschwankungen, die durch den Eintrag von nicht gleichmäßig temperiertem Katalysatormaterial verursacht werden können, bei der Durchführung des Verfahrens gering zu halten. Zu beachten ist auch, dass die Hopper in Kombination mit der Katalysatorfluidisierungsvorrichtung innerhalb des Hoppers zu einer weiteren Verbesserung der erfindungsgemäßen Vorrichtung und des erfindungsgemäßen Verfahrens führt.

Zur Dosierung des partikelförmigen Materials ist eine Ausführungsform der Vorrichtung bevorzugt, bei der das partikelförmige Material durch einen positiven Differenzdruck vom Hopper in den Auslass am Hopper zum Transportgasstrom 23 transferiert wird. Bevorzugt ist eine Ausführungsform der Vorrichtung, wobei der Hopper 11 und der Separator eine Wirkverbindung 42 aufweisen, die ein kontinuierlich wirkendes Druckregelventil 41 ansteuert, über welches ein Differenzdruck zwischen Hopper und Separator eingestellt wird. In Bezug auf die Verwendung der Differenzdruckregelung und der druckgesteuerten Katalysatordosierung ist zu sagen, dass diese besonders vorteilhaft ist.

Eine andere Möglichkeit zur Dosierung des partikelförmigen Materials wäre durch eine Ausführungsform gegeben, bei der am Ausgang des Hoppers eine Förderschnecke angeordnet ist, die das partikelförmige Material dem Transportgasstrom zuführt. Wiederum eine andere Möglichkeit zur Dosierung des partikelförmigen Materials wäre durch eine Ausführungsform gegeben, bei der Katalysator mittels eines Vibrationsantriebs vom Hopper in den Transportgasstrom überführt wird. Ein Vibrationsantrieb wird in unterschiedlichen Prozessen zur Pulverdosierung verwendet. Dieser hat jedoch den Nachteil, dass es zu einer gewissen Entmischung des partikelförmigen Materials nach der Partikelgröße kommen kann, wobei dann die Agglomeration von größeren Partikeln auch leicht zu Verstopfungsproblemen beim Auslass am Hopper führen können. Darüber hinaus ist ein Vibrationsantrieb auch in Verbindung mit einem Hopper bevorzugt, in dem das partikelförmige Material nicht im fluidisierten Zustand vorliegt. Um hier eine homogene Temperaturverteilung im Bett des partikelförmigen Materials sicherzustellen, muss der Hopper eine kleine Dimensionierung aufweisen, wobei das Innenvolumen im Bereich von 100 bis 200 mL liegen kann. Dies ist für den automatisierten Betrieb nachteilhaft, da der Hopper nach nur ein- oder zweimaliger Durchführung des Verfahrens erneut zu befüllen ist. Häufiges Nachfüllen des Hoppers ist nachteilhaft für den automatischen Betrieb der erfindungsgemäßen Vorrichtung. Denkbar sind jedoch auch Ausführungsformen der erfindungsgemäßen Vorrichtungen, bei denen die Vorrichtung mit mehreren kleineren Hoppern ausgestattet ist. Die Ausgestaltung der Vorrichtung mit mehreren Hoppern ist dann vorteilhaft, wenn es bei der Durchführung des Verfahrens beabsichtigt ist, den Prozess mehrfach nacheinander unter Verwendung unterschiedlicher Katalysatormaterialien durchzuführen.

In einer bevorzugten Ausführungsform wird das Verfahren so durchgeführt, dass das Katalysator-zu-Öl-Verhältnis (Kat/Öl-Verhältnis) im Bereich von 1 - 100 liegt, weiter vorzugsweise ist das Kat/Öl-Verhältnis im Bereich von 3 - 50, darüber hinaus bevorzugt ist das Kat/Öl-Verhältnis im Bereich von 4 - 25. Bevorzugt ist es, dass jeweils mit einer Befüllung des Hoppers und einer Befüllung des Vorlagebehälters für flüssige Feeds eine Serie von Versuchen vorgenommen werden kann, die alle gemäß des erfindungsgemäßen Verfahrens durchgeführt werden. Die technische Grundlage ist dadurch gegeben, dass die Flüssigkeitsdosierung über die Programmsteuerung vorgenommen wird und dabei gleichzeitig die Menge an dosierter Flüssigkeit erfasst wird.

Die Menge an zugeführtem Katalysator lässt sich anhand einer Kalibrierung der Feststoffdosiervorrichtung oder anhand einer Auswaage des aufgefangenen Katalysators bestimmen. Der breite Bereich für unterschiedlichen Kat/Öl-Verhältnisse, die bei der Durchführung des Verfahrens vorgegeben werden können, ist vorteilhaft, da dadurch die die Verfahrensbedingungen in einem sehr großen Parameterfeld untersucht werden können.

In Bezug auf den Feedinjektor ist anzumerken, dass zur Injektion von flüssigen Feeds vorzugsweise eine Sprühdüse verwendet wird, die sehr feinteilige Sprühnebel erzeugt. Beispiele für geeignete Injektoren werden in der EP 3 283 209 B1 beschrieben.

Weiterhin ist eine Ausführungsform der erfindungsgemäßen Vorrichtung bevorzugt, die dadurch gekennzeichnet ist, dass der Separator 17 eine Gaszufuhr 47 aufweist. Vorzugsweise ist im unteren Innenraum des Separators eine poröse Bodenplatte angeordnet, die gasdurchlässig ist. Vorzugsweise ist die Gaszufuhr zum Separator unterhalb der porösen Bodenplatte angeordnet, wodurch das im Hopper aufgefangene partikelförmige Material im fluidisierten Zustand im Separator gelagert wird. Durch die Fluidisierung des aufgefangenen partikelförmigen Materials lässt sich eine bessere Homogenität der Temperaturverteilung erreichen gegenüber einer nicht fluidisierten Lagerung. Darüber hinaus bevorzugt ist die Vorrichtung, die mit Differenzdruckdosierer ausgestattet ist, der zusätzlich noch einen Vibrationsantrieb im Bereich der unteren Ausgangsleitung des Hoppers aufweist. Der Vibrationsantrieb hat in dieser Anordnung den Vorteil, dass die Störanfälligkeit gegenüber einer Leitungsverstopfung weiter reduziert werden kann, was für den automatischen Betrieb der Vorrichtung sehr vorteilhaft ist.

In einer weiteren Ausführungsform der Vorrichtung, die ebenso bevorzugt ist, sind Hopper 11 und der Flugstromreaktor 13 mit Beheizungsvorrichtungen ausgestattet und die Verbindung 9 von Hopper mit Flugstromreaktor ist mit einer Vorheizstrecke 71 ausgestattet, weiter vorzugsweise sind die Elemente aus der Gruppe Separator 17, Flüssigkeitsabscheider 27 und Probengefäß (63) mit Temperierungsvorrichtungen ausgestattet. Bezüglich des vorteilhaften Einsatzes der Verbindung 9 mit einer Vorheizstrecke 71 wird auch auf die Beschreibung verwiesen, die in der PCT-Anmeldung WO 2021/074407 A1 offenbart wird, wobei die Durchführung des Verfahrens bei einer Reaktortemperatur im Bereich von 400 bis 850°C, weiter bevorzugt im Bereich von 500 bis 800 °C, darüber hinaus bevorzugt im Bereich von 650 bis 750 °C durchgeführt wird. Hierbei ist es bevorzugt, dass die Temperatur der Vorheizstrecke in einem Bereich von 400 bis 1200 °C liegt. Die Temperierung des Katalysators in der Vorheizstrecke ist erforderlich, um den Energieeintrag sicherzustellen, damit das Verfahren im Flugstromreaktor bei hohen Temperaturen durchgeführt werden kann. Aufgrund der kurzen Verweilzeiten im Flugstromreaktor ist die Temperierung des Flugstromreaktors nicht ausreichend, um die hohen Reaktionstemperaturen sicherzustellen.

In einer weiter bevorzugten Ausführungsform ist der Separator mit einer Strippgaszufuhr 47 ausgestattet, weiter vorzugsweise ist der Separator mit einem Sammelsystem für partikelförmiges Material, und zwar in Form von einem oder mehreren Probensammelgefäßen, ausgestattet, vorzugsweise weist das Sammelsystem zwei bis zehn Probensammelgefäße 72, 72' auf. Die Strippgaszufuhr 47 ermöglicht es, nach der Durchführung von chemischen Prozessen im Flugstromreaktor noch weiter Spülgas durch den Separator zu leiten, um unerwünschte Folgereaktionen zu unterbinden und Produktkomponenten zumindest teilweise zu entfernen, die auf der Oberfläche des partikelförmigen Materials anhaften. Darüber hinaus bietet die Strippgaszufuhr 47 die Möglichkeit, dass im Separator aufgefangene partikelförmige Material nach der Beendigung des Strippvorgangs in ein Probensammelgefäß zu transferieren. Der Transfer des partikelförmigen Materials erfolgt durch Druckluftstöße. Die Durchführung des Strippens mittels einer Strippgaszufuhr hat den Vorteil, dass sich die Prozessbedingungen so justieren lassen, dass die Prozessbedingungen dem Raffinerieprozess entsprechen. Beim Strippvorgang werden noch Wertprodukte von der Katalysatoroberfläche entfernt, die im Flüssigkeitsabscheider 27 aufgefangen werden.

In einer bevorzugten Ausführungsform ist die Vorrichtung dadurch gekennzeichnet, dass der Druckregler 31 stromab des Flüssigkeitsabscheiders 27 eine Regeldynamik aufweist, die im Bereich von 1 : 100 liegt, vorzugsweise im Bereich von 1 : 1.000, weiter vorzugsweise im Bereich von 1 : 10.000. Die Regeldynamik ergibt sich aus dem Verhältnis des kleinsten und größten Leitwerts des Ventils.

Insbesondere ist eine Ausführungsform der erfindungsgemäßen Vorrichtung dadurch gekennzeichnet, dass der Druckregler stromab des Flüssigkeitsabscheiders eine Regelgüte aufweist, deren Abweichung in Bezug auf den Sollwert < 10 % ist, vorzugsweise ist die Abweichung in Bezug auf den Sollwert < 5 % und weiter vorzugsweise ist die Abweichung in Bezug auf den Sollwert < 1 %, und/oder die Einschwingzeit des Reglers im Bereich von 0,1 - 30 Sekunden liegt, vorzugsweise liegt die Einschwingzeit < 10 Sekunden, weiter vorzugsweise < 5 Sekunden, und insbesondere vorzugsweise < 2 Sekunden. Insgesamt weist die Vorrichtung in einer bevorzugten Ausführungsform zumindest die zwei unterschiedlichen Druckregelstrecken auf, die mit dem Druckregler 41 und dem Druckregler 31 verbunden sind. Hinzu kommt noch die Differenzflusskontrolle, die dadurch ermöglicht wird, dass die Kompensationsgaszufuhr 21 mit den abfließenden Strömen gekoppelt wird und diese dann kompensiert. Somit steht in Verbindung mit der erfindungsgemäßen Vorrichtung ein hoher regelungstechnischer Aufwand.

Mittels der erfindungsgemäßen Vorrichtung und des erfindungsgemäßen Verfahrens lassen sich Bedingungen darstellen, die mit einem hohen Grad an Genauigkeit denjenigen Prozessbedingungen entsprechen, die in großtechnischen Prozessen mit Flugstromreaktoren und insbesondere FCC-Anlagen vorherrschen, was die Verweilzeiten, Partialdrücke und Strömungscharakteristika betrifft. Im Gegensatz zum Betrieb einer großtechnischen FCC-Anlage wird das erfindungsgemäße Verfahren in einer diskontinuierlichen Betriebsweise durchgeführt. Bei der diskontinuierlichen Betriebsweise hat das Verfahren den Vorteil, dass in einer gegebenen Zeit eine Vielzahl von Untersuchungen bei unterschiedlichen Prozessbedingungen durchgeführt werden können, wodurch ein Entwicklungsprozess gegenüber anderen Methoden beschleunigt werden kann. Gegenüber einer Pilotanlage mit zirkulierendem Katalysator ist das erfindungsgemäße Verfahren sehr ressourcenschonend und schnell. In einer bevorzugten Ausführungsform weist die erfindungsgemäße Vorrichtung mehrere Automatisierungselemente auf, mit denen die diskontinuierliche Betriebsweise zumindest teilweise in einem automatisierten Betrieb durchgeführt werden kann, was zu einer Durchsatzsteigerung führt.

Somit ergeben sich hier Synergieeffekte durch die Kombination aus der erfindungsgemäßen Vorrichtung und dem erfindungsgemäßen Verfahren, die darin resultieren, dass die Datengenauigkeit erhöht wird und gleichzeitig die Untersuchung zumindest teilautomatisiert mit einer hohen Geschwindigkeit durchgeführt werden können, so dass in einer kürzeren Zeit Ergebnisse mit einer höheren Genauigkeit generiert werden können gegenüber denjenigen Verfahren, die aus dem Stand der Technik bekannt sind.

In einer bevorzugten Ausführungsform wird das Verfahren mehrfach hintereinander durchgeführt, wobei es weiter bevorzugt ist, dass bei der Durchführung des Verfahrens und der Wiederholungen kein Eingriffe durch einen Benutzer der Vorrichtung oder des Verfahrens notwendig sind, was vorteilhaft ist, da die erfindungsgemäße Vorrichtung und das erfindungsgemäße Verfahren in einem Laborbetrieb oder einem Technikumsbetrieb für 24 Stunden pro Tag durchgeführt werden können, ohne dass hier ein Schichtbetrieb für den Benutzer der erfindungsgemäßen Vorrichtung erforderlich ist. Darüber hinaus ist festzustellen, dass die teilweise oder auch vollständige Automatisierung der Vorrichtung und des Verfahrens vorteilhaft ist, da diejenigen Fehlerquellen reduziert werden, die durch manuelle Arbeitsschritte verursacht werden können.

Die Erfindung bezieht sich auf ein Verfahren zur Untersuchung von chemischen Prozessen in einer Vorrichtung, die eine der hier in der Beschreibung und den Ansprüchen genannten Ausführungsformen aufweist, wobei das Verfahren die nachfolgenden Schritte umfasst:

i) partikelförmiges Material wird vom Hopper 11 kommend mit Transportgas durch die Verbindung zum Eingang eines Flugstromreaktors 13 geleitet;
ii) Eduktstrom wird zum Eingang des Flugstromreaktors geleitet, wobei der Eduktstrom mit dem partikelhaltigen Gasstrom in Kontakt gebracht und durchmischt wird;
iii) die Mischung von partikelhaltigem Gasstrom und Eduktstrom wird durch den Flugstromreaktor in einen Separator 17 geleitet;
iv) im Separator wird das partikelförmige Material abgeschieden und die gasförmigen Komponenten zu einer Ausgangsleitung geführt, wobei kondensierbare Komponenten in einem Abscheider 27 und nicht kondensierbare in einem Probengefäß 63 gesammelt und einer analytischen Charakterisierung zugeführt werden;

bei der Durchführung der Schritte i) bis iii) des Verfahrens weisen der partikelhaltige Gasstrom und der Eduktstrom jeweils einen vorgegebenen Massenstrom auf; wobei die Durchführung der Schritte i) bis iii) des Verfahrens bei den vorgegebenen Massenströmen im Zeitbereich von 10 bis 500 Sekunden und die Durchführung von Schritt iv) des Verfahrens im Zeitbereich von 150 bis 1200 Sekunden liegt, vorzugsweise liegt die Dauer von Schritt iv) im Zeitbereich von 200 bis 600 Sekunden, darüber hinaus bevorzugt im Zeitbereich von 250 bis 500 Sekunden.

In einer bevorzugten Ausführungsform des erfindungsgemäßen Verfahrens erfolgt die Durchführung der Schritte wie nachfolgend genannt:

- das im Hopper 11 gelagerte partikelförmige Material wird mittels positiven Differenzdrucks vom Hopper 11 in die Verbindungsleitung 9 transferiert und bei der Durchführung von Schritt i) werden der Flussstrom des Transportgases, der Flussstrom der Hoppergaszufuhr und der Flussstrom der Überdruckabfuhr des Hoppers erfasst;
- bei der Durchführung des Schritt ii) wird der Flussstrom des Eduktstroms erfasst;
- die bei den Verfahrensschritten i) und ii) erfassten Flussströme werden in Beziehung gesetzt und die Abweichungen von vorgegebenen Zielwerten werden durch eine Zufuhr von Kompensationsgas ausgeglichen.

Näherungsweise lassen sich die Verfahrensschritte i), ii) und iii) als Prozessschritte und der Verfahrensschritt iv) als Aufarbeitungsschritt beziehungsweise Auftrennungsschritt klassifizieren. Die Dauer der Verfahrensschritte i), ii) und iii) ist kürzer als die Dauer des Verfahrensschritts iv) (somit des Aufarbeitungsschritts).

In einer bevorzugten Ausführungsform liegt die Dauer der Prozessschritte beziehungsweise der Verfahrensschritte i), ii) und iii) im Bereich von 15 - 120 Sekunden, darüber hinaus bevorzugt in einem Bereich von 30 bis 90 Sekunden. Die durchschnittliche Verweilzeit eines Katalysatorpartikels im Flugstromreaktor liegt, je nach gewählten Prozessbedingungen, im Bereich von 0,5 bis 4 Sekunden. Eine vorteilhafte Eigenschaft der erfindungsgemäßen Vorrichtung ist auch, dass die Prozessparameter so gewählt werden können, dass diese die Prozessbedingungen von ausgewählten großtechnischen FCC- oder anderen Flugstrom-Anlagen nachstellen.

Tabelle1 mit einer Zusammenfassung von Dosierparametern.

|  | niedrige Dosierrate [g/min] | hohe Dosierrate [g/min] |
|---|---|---|
| Feed | 3 | 12 |
| Kat | 30 | 200 |
| Kat/Öl | 30/3 | 200/12 |
| Kat/Öl | 200/3 | 30/12 |

In einer bevorzugten Ausführungsform wird das erfindungsgemäße Verfahren bei einem Druck im Bereich von 0,5 bis 10 bara durchgeführt, vorzugsweise bei einem Druck im Bereich von 1,0 bis 7,5 bara, besonders bevorzugt bei einem Druck im Bereich von 1,0 bis 6 bara.

Darüber hinaus ist auch eine Durchführung des Verfahrens bevorzugt, wobei der Flugstromreaktor 13 bei der Durchführung des Verfahrens bei einer Temperatur im Bereich von 100 bis 950 °C temperiert wird, vorzugsweise wird der Flugstromreaktor 13 bei der Durchführung des Verfahrens bei einer Temperatur im Bereich von 250 bis 750 °C temperiert.

In einer bevorzugten Ausführungsform umfasst das partikelförmige Material einen Fluid- oder FCC-Katalysator, wobei das Verfahren mit zumindest einem flüssigen Feed durchgeführt wird und wobei das Verhältnis von Katalysator zu flüssigem Feed, das auch als Kat/Feed-Verhältnis bezeichnet wird, in einem Bereich von 1/1 bis 100/1 liegt, vorzugsweise liegt das Kat/Feed-Verhältnis in einem Bereich von 3/1 bis 50/1, darüber hinaus bevorzugt liegt das das Kat/Feed-Verhältnis in einem Bereich von 4/1 bis 25/1. Die Angabe des Katalysator-zu-Feedverhältnisses ist vorliegend als Massenverhältnis gegeben. In einer weiteren Ausführungsform, die ebenso eine bevorzugte Ausführungsform darstellt, wird das Verfahren in Verbindung mit einem gasförmigen Fluid durchgeführt, wobei das gasförmige Feed als Hilfsfeed zugeführt wird oder als alleiniges Feed zugeführt wird. Im Fall, dass das gasförmige Feed als alleiniges Feed zugeführt wird, so ist das Massenverhältnis zwischen Katalysator-zu-Feed im Bereich von 1/1 bis 100/1, vorzugsweise im Bereich von 3/1 bis 50/1, darüber hinaus bevorzugt im Bereich von 4/1 bis 25/1. Im Fall, dass sowohl gasförmiges Fluid als auch flüssiges Fluid als Edukt eingesetzt werden, so bezieht sich das vorliegend genannte Massenverhältnis auf die Summe von gasförmigem und flüssigem Fluid. Die Begriffe Fluid und Feed werden in der vorliegenden Beschreibung als gleichbedeutend verwendet.

Beispiele für gasförmige Feeds sind Wasserstoff, der bei Hydrierreaktionen als Feed hinzugefügt wird, und auch Ethan oder Propan, die durch Dehydrogenierung in Ethen oder Propen umgewandelt werden können.

Besonders bevorzugt bei der Durchführung des Verfahrens ist, dass die Verfahrensschritte mehrfach durchgeführt werden, wobei bei den Wiederholungen des Verfahrens zumindest ein Prozessparameter der ausgewählt ist aus der Gruppe Kat/Feed-Verhältnis, Temperatur, Druck, Feed, Zusammensetzung des Feeds, Partialdruck des Feeds, sofern dieses verdampfbar ist, oder die Konzentration des Feeds im Eingangsbereich des Flugstromreaktors, Katalysator, Additiv verändert wird, wobei ein Prozessparametersatz generiert wird; vorzugsweise wird das Verfahren zumindest dreimal in Serie durchgeführt, wobei bei dem Prozessparametersatz das Kat/Feed-Verhältnis verändert wird. Bei der Auswertung der so erhaltenen experimentellen Daten in Abhängigkeit vom Kat/Feed-Verhältnis lassen sich Regressionskurven an die Messdaten anpassen. Auf der Basis der unterschiedlichen Regressionskurven lassen sich unterschiedliche Katalysator- und Feeds oder weitere der oben genannten Prozessparameter besser miteinander vergleichen, wobei die Vergleiche auf Werte bei konstanter Konversion, konstantem Katalysator-zu-Feed-Verhältnis oder konstanter Koksabscheidung bezogen werden können. Eine Mindestmenge an Koksabscheidung auf dem Katalysator ist in großtechnischen FCC-Verfahren für die Regeneration des Katalysators beziehungsweise für die Bereitstellung der benötigten Wärme für die endothermen Crackreaktionen von Bedeutung. Eine zu hohe Menge an Koksabscheidung kann zu einer thermischen Schädigung von Anlagenkomponenten großtechnischer FCC-Anlagen bei der Regeneration führen.

Weiterhin ist es bevorzugt, dass bei der Durchführung des Verfahrens eine oder mehrere Eduktkomponenten eingesetzt werden, die ausgewählt sind aus der Gruppe Erdöle, Öle, Schweröle, Gasöle, Vakuumgasöle, Rückstandsöle, Pflanzenöle, Fette, Fettsäuren, Triglyceride, Lipide, Bioöle, Pyrolysekondensate, Hydrothermalöle, Pyrolyseöle, Torföl, Tallöl, Lignin, Benzin, Diesel, Naphtha, Polymerschmelzen, Paraffinöle, Wachsschmelzen, Zuckerlösungen, Kohlenhydratlösungen, flüssige organische Extrakte, Terpentin, Harze, Teeröle, Pech. Der explorative Einsatz der Vorrichtung und des Verfahrens ergibt Synergieeffekte, da das Verfahren ressourcenschonend und schnell ist gegenüber dem Verfahren in Pilotanlagen und genauer gegenüber anderen Laborverfahren aus dem Stand der Technik. Insbesondere lassen sich neue Ansätze für die Raffinerie der Zukunft untersuchen, die darin bestehen, dass Biomasse, Reststoffe oder Abfallströme als Feedquellen eingesetzt werden oder zumindest beigemischt werden.

Der Aufarbeitungsschritt beziehungsweise Auftrennungsschritt umfasst das Abstrippen von Gasen und kondensierbaren Dämpfen vom partikelförmigen Material im Separator. Nach dem Strippen von Produktkomponenten wird der im Separator aufgefangenen Katalysator entnommen.

In einer bevorzugten Ausführungsform der erfindungsgemäßen Vorrichtung und des erfindungsgemäßen Verfahrens erfolgt die Entnahme des Katalysators aus dem Separator 17 durch Ausblasen, und zwar vorzugsweise mittels eines pneumatischen Transports, in einen oder mehrere Sammelbehälter 72 mittels eines Trägergasstroms. Der im Sammelbehälter aufgefangene Katalysator wird einer Kohlenstoffanalyse zugeführt, um den Gehalt an Kohlenstoff auf dem Katalysator zu ermitteln. Zur Durchführung der Kohlenstoffanalyse werden Analysatoren und Verfahren eingesetzt, die aus dem Stand der Technik bekannt sind (beispielsweise kann als Kohlenstoffanalysator ein Gerät RC612 von Leco Instrumente GmbH eingesetzt werden.)

Die im Flüssigkeitsabscheider 27 auskondensierten Komponenten werden einer qualitativen und quantitativen Analyse zugeführt. Ebenso werden die im Probengefäß 63 aufgefangenen Gase einer qualitativen und quantitativen Analyse zugeführt. In einer bevorzugten Ausführungsform wird die qualitative und quantitativen Analyse mittels eines Online-Analysators durchgeführt, der aus dem Stand der Technik bekannt ist, wobei es sich beispielsweise um ein Online-FTIR oder ein Online-GC handelt.

In einer weiteren Ausführungsform ist die erfindungsgemäße Vorrichtung ohne eine Flüssigkeitsabscheider ausgestattet, so dass alle gasförmigen Komponenten einschließlich der kondensierbaren Komponenten in ein Probengefäß 63 oder mehrere Probengefäße transferiert werden. Bei dieser Ausführungsform der Vorrichtung werden das Probengefäß oder die Probengefäße bei einer Temperatur gelagert, die ein Auskondensieren der kondensierbaren Komponenten verhindert. In einer bevorzugten Ausführungsform wird ein Probengefäß oder es werden mehrere Probengefäße eingesetzt, die in der PCT-Anmeldung WO 2020/078952 A1 offenbart werden. Bei den in der PCT-Anmeldung WO 2020/078952 A1 offenbarten Probengefäßen handelt es sich um Gaszylinder, die vorzugsweise mittels eines Pneumatik-Kolbens betrieben werden. Die Gaszylinder haben gegenüber den Gasfallen, die auf dem Prinzip der Verdrängung von Wasser basieren, den Vorteil, dass diese sich auch für die Aufnahme von polaren Komponenten eignen. Da polare Komponenten oftmals wasserlöslich sind oder mit Wasser reagieren können, können diese bei Gasabscheidern mit Wasserverdrängung dem Probenraum in einer unkontrollierten Weise entzogen werden.

In einer weiteren Ausführungsform ist die erfindungsgemäße Vorrichtung mit zwei oder mehr Feeddosiereinheiten für flüssige Feeds 91, 92 ausgestattet. Die Verwendung von zwei oder mehr Feeddosiereinheiten für flüssige Feeds ist insbesondere auch dann vorteilhaft, wenn die zu dosierenden Feeds nicht mischbar sind. Dazu ist es auch vorteilhaft, die Vorrichtung in einer Ausführungsform einzusetzen, die mit mehreren Feedzuführungen, vorzugsweise einer ersten Feedzuführung und einer zweiten Feedzuführung ausgestattet ist. Der Vorteil hier ist, dass Feeds gemeinsam prozessiert beziehungsweise gemeinsam injiziert werden können, die nicht mischbar sind.

Die Erfindung betrifft auch ein Computerprogramm zur Steuerung einer Vorrichtung zur Untersuchung von chemischen Prozessen mittels Flugstromreaktor 13, wobei die Vorrichtung eine der hier dargestellten Ausführungsformen aufweist.

Ebenso betrifft die Erfindung auch ein Computerprogramm zur Durchführung des erfindungsgemäßen Verfahrens mittels eines Flugstromreaktors 13, welche im Rahmen der vorliegenden Offenbarung dargestellt wird.

Kurze Beschreibung der Figuren

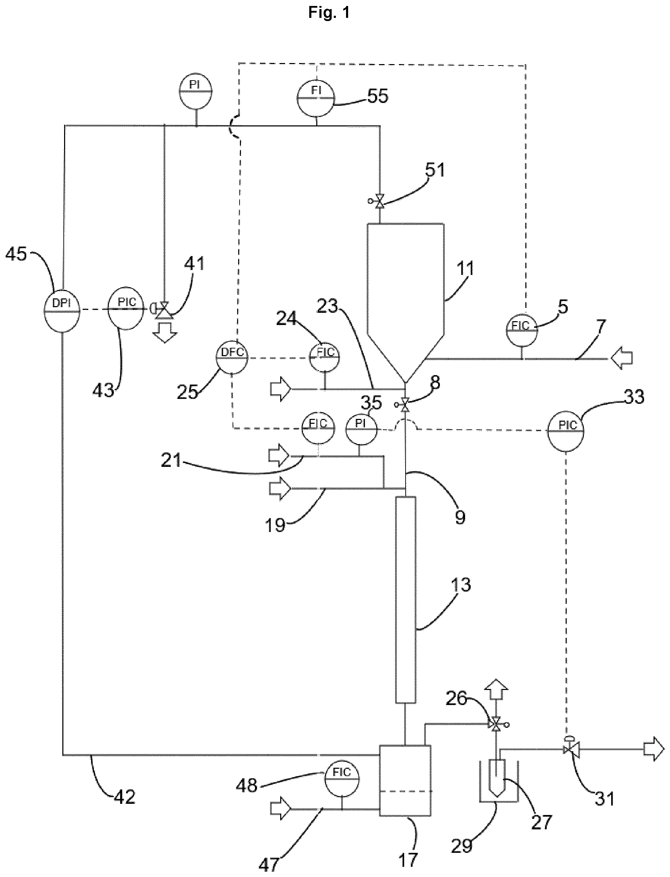

Fig. 1 zeigt eine schematische Darstellung einer Vorrichtung zur Untersuchung chemischer Prozesse mit einem Flugstromreaktor 13, bei welcher der Hopper 11 und der Separator 17 eine Wirkverbindung 42 aufweisen, über die mittels eines Druckregelventils 41 ein Differenzdruck eingestellt wird, wobei der Flussregler, der den Gasfluss zum Hopper 11 steuert mit dem Flussregler der Kompensationsgaszufuhr 21 über den Differenzflussregler 25 in Verbindung stehen. Die Vorrichtung weist eine Eduktzufuhr 19 auf, die für die Zufuhr von gasförmigen Komponenten ausgelegt ist;

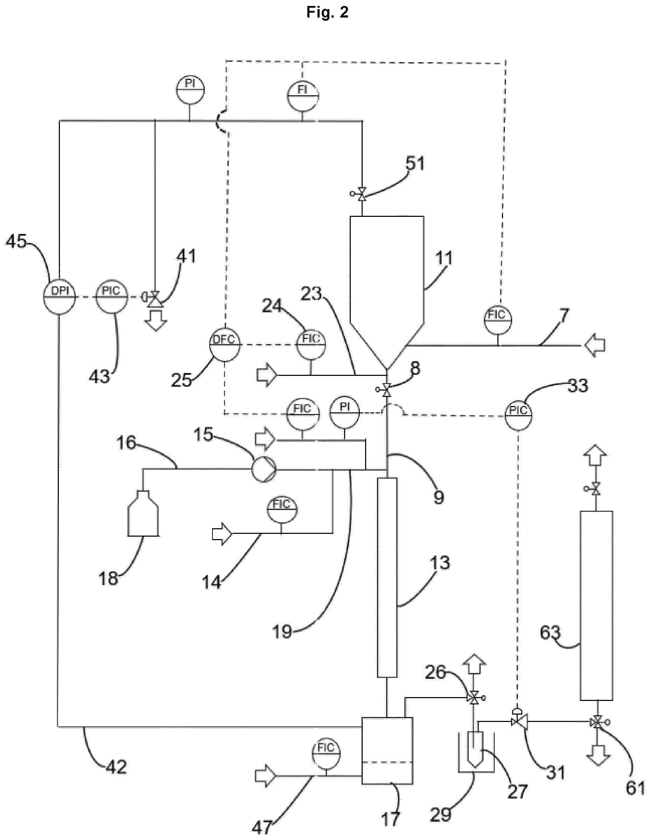

Fig. 2 zeigt eine schematische Darstellung der Vorrichtung, die in Fig. 1 dargestellt ist; die Eduktzufuhr 19 weist eine Feedzufuhr für Flüssigkeiten auf, die mit einem Feedbehälter 18 und einer Pumpe 15 versehen ist, und eine Verdampfungsgaszufuhr 14; stromab des Flüssigkeitsabscheiders und des Druckregelventils 31 ist ein Auswahlventil 61 und ein Probenbehälter 63 angeordnet;

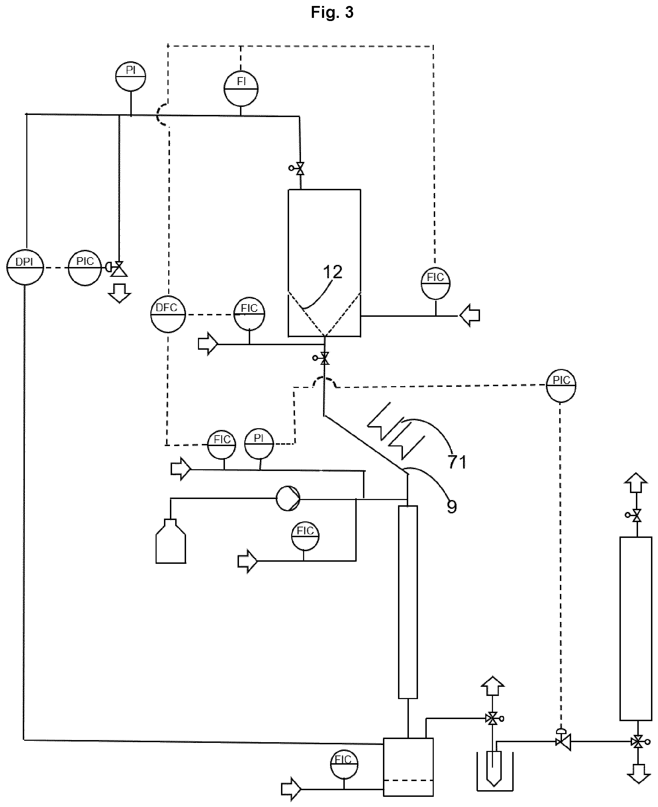

Fig. 3 zeigt eine schematische Darstellung einer Vorrichtung zur Untersuchung chemischer Prozesse mit einem Flugstromreaktor 13 in einer Ausführungsform, bei der die Verbindung 9 zwischen Hopper 11 und Flugstromreaktor 13 mit einer Vorheizstrecke 71 ausgestattet ist; darüber hinaus weist der Hopper 11 ein poröses Innenelement 12 auf;

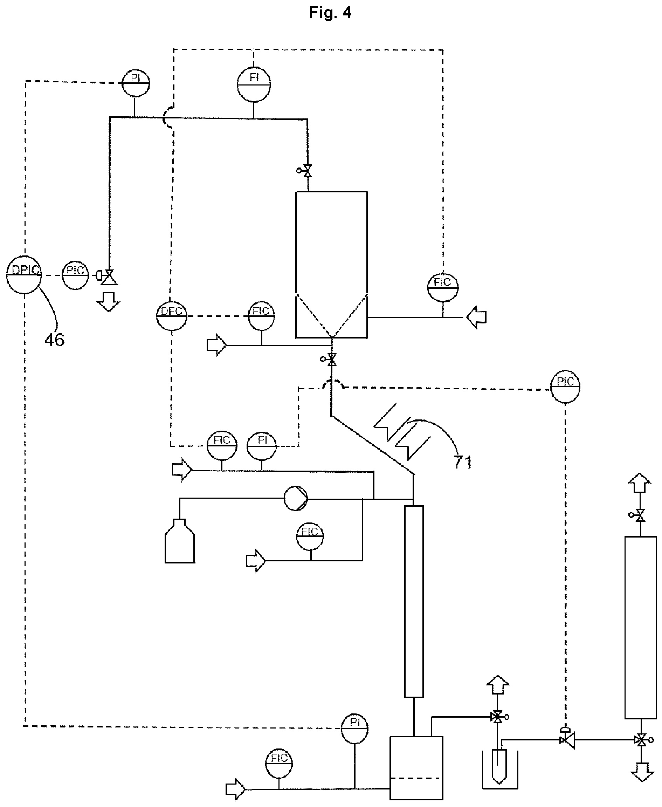

Fig. 4 zeigt eine schematische Darstellung einer Vorrichtung zur Untersuchung chemischer Prozesse mit einem Flugstromreaktor 13 in einer Ausführungsform, die mit einer elektronischen Differenzdruckregelung 46 (DPIC) zwischen dem Hopper 11 und dem Separator 17 ausgestattet ist; eine elektronische Differenzdruckregelung 46 bedeutet, dass die Messwerte von Druck im Separator 17 und Hopper 11 mittels Drucksensoren erfasst werden, der Differenzdruckregler steuert die Fluss- und Druckregler an und sorgt dafür, dass der Hopper 11 unter den Überdruck gesetzt wird, der den Katalysator in die Leitung 9 überführt;

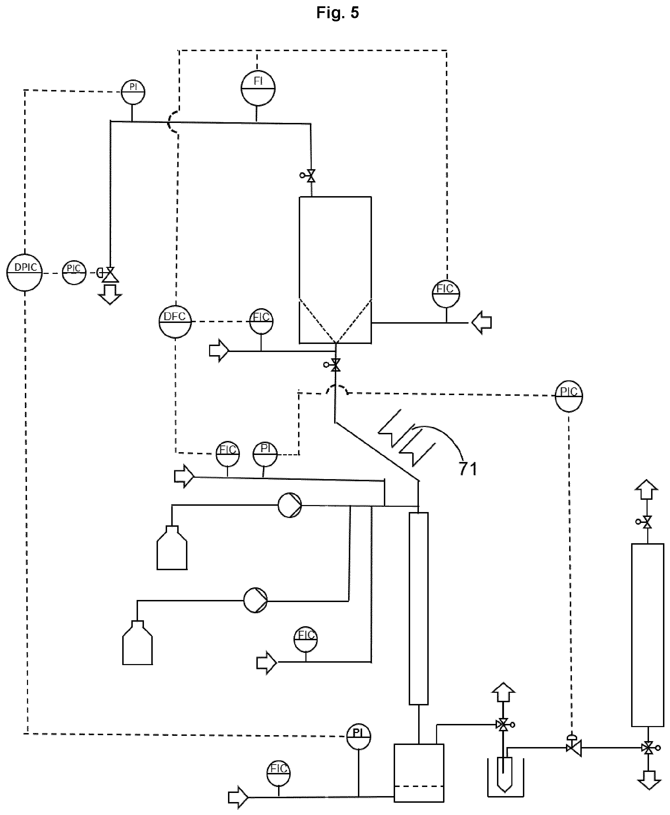

Fig. 5 zeigt eine schematische Darstellung einer Vorrichtung zur Untersuchung chemischer Prozesse mit einem Flugstromreaktor 13 in einer Ausführungsform, die mit einer ersten Feedzuführung und einer zweiten Feedzuführung ausgestattet ist, wobei die Vorrichtung auch mit einer elektronischen Differenzdruckregelung 46 ausgestattet ist; die Feeds aus der ersten und zweiten Feedzuführung werden zunächst gemischt und nach der Durchmischung mit Verdampfungsgas beaufschlagt;

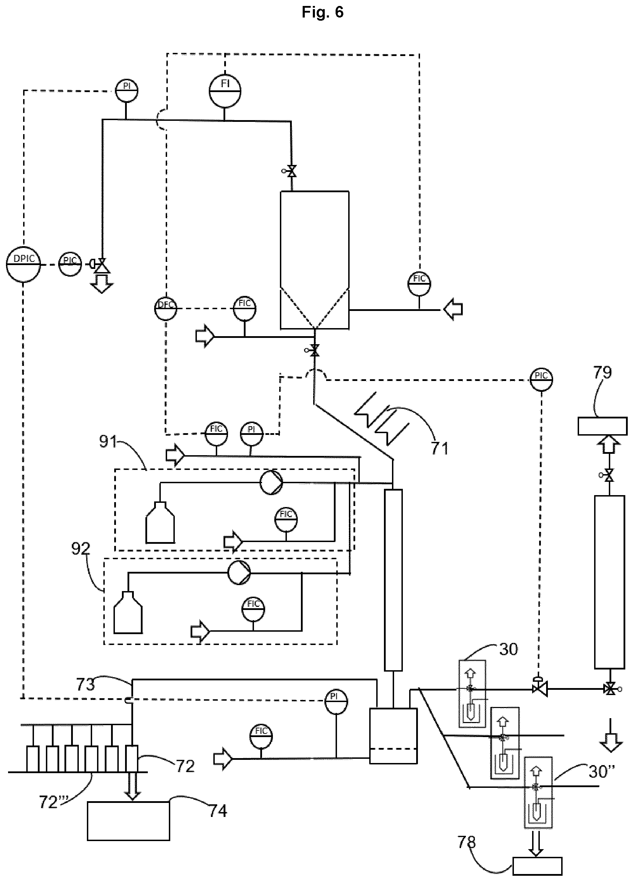

Fig. 6 zeigt eine schematische Darstellung einer Vorrichtung zur Untersuchung chemischer Prozesse mit einem Flugstromreaktor 13 in einer Ausführungsform, die mit einer ersten Baueinheit einer Feedzuführung 91 und einer zweiten Baueinheit einer Feedzuführung 92 ausgestattet ist wobei die Vorrichtung weiterhin mit Sammelbehältern für die Aufnahme von partikelförmigem Material ausgestattet ist, und zwar im vorliegenden Fall mit sechs Sammelbehältern 72, 72'''; den Sammelbehältern nachgeschaltet ist ein Kohlenstoffanalysator 74; stromab des Separators ist eine Gruppe mit drei Flüssigkeitsabscheidern 30,...30" angeordnet; stromab der Flüssigkeitsabscheider ist ein Probengefäß zur Aufnahme von Gasen angeordnet, dem Probengefäß nachgeschaltet ist ein online Analysator 79;

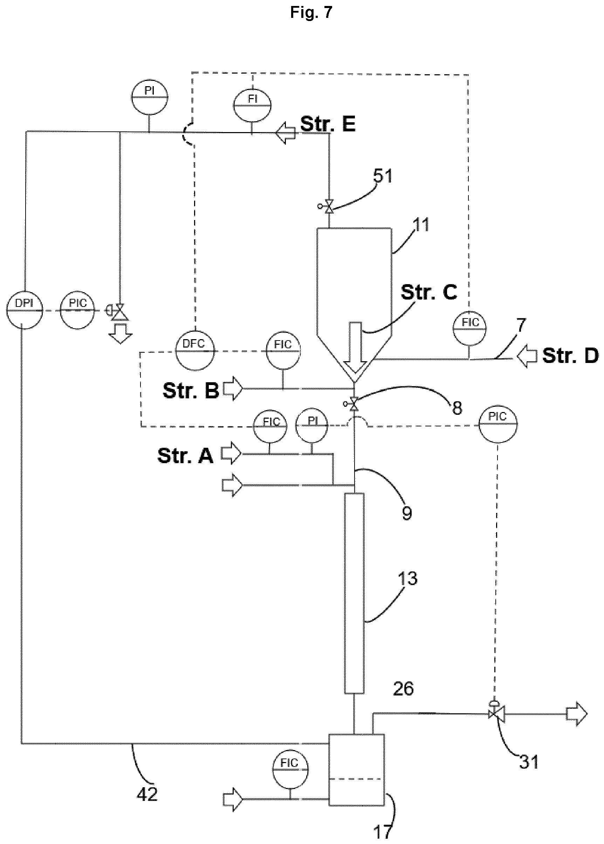

Fig. 7 zeigt eine schematische Darstellung der erfindungsgemäßen Vorrichtung in einer vereinfachten Darstellung mit einer Kennzeichnung der einzelnen Massenflussströme, die als Str. A bis Str. E beziehungsweise als Str. A bis Str. E gekennzeichnet sind, wobei die Bedeutung der Abkürzung "Str." gleich "Strom" beziehungsweise "Stream" bedeutet, wobei Str. A den Kompensationsgasstrom darstellt, Str. B den Transportgasstrom, Str. D den Hoppergaszufuhrstrom, Str.E den Hoppergasaustrittsstrom und Str. C die Differenz aus Str. D und Str. E.

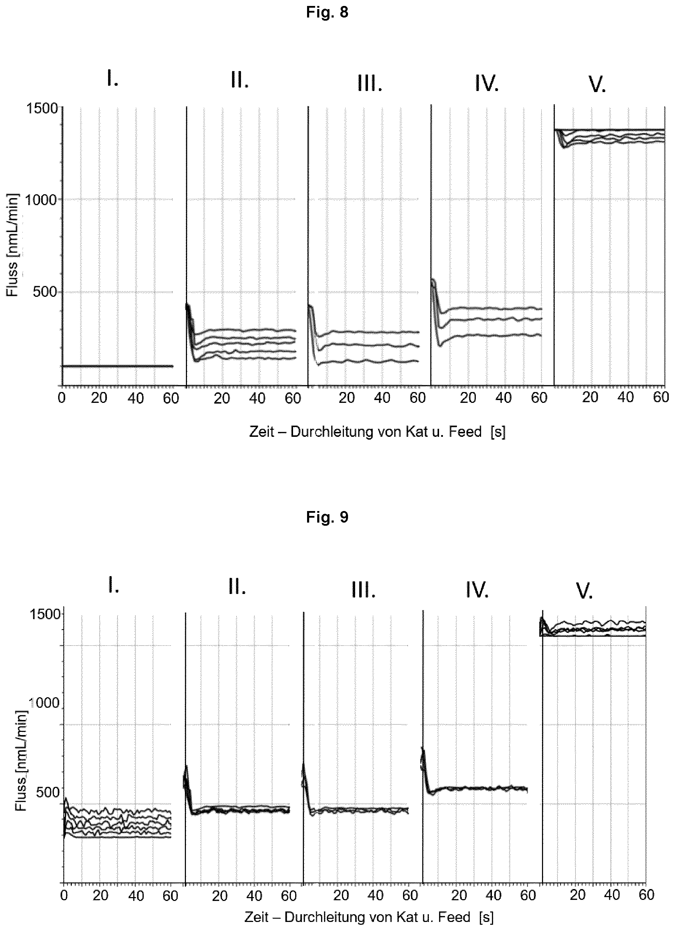

Fig. 8 zeigt mehrere Darstellungen mit experimentellen Beispielen, bei denen die zeitlichen Verläufe der Flussrate an Kompensationsgas innerhalb von Vergleichsbeispielmessungen und mehreren Beispielmessungen aufgezeichnet wurden. In der Darstellung I. sind Vergleichsbeispiele (VB1 bis VB6) aus dem Stand der Technik gezeigt, bei dem das Einspeisegas konstanten Verlauf aufweist und somit keine Anpassung der Kompensationsgaszufuhr erfolgt. In der Darstellung II. sind die Beispiele B1 bis B5 gezeigt, die nach dem erfindungsgemäßen Verfahren durchgeführt wurden. Ebenso wurden diejenigen Beispiele, die in den Darstellungen III. (Beispiele B6 bis B8), IV. (Beispiele B9 bis B11) und V. (Beispiele B12 bis B15) gezeigt sind, nach dem erfindungsgemäßen Verfahren durchgeführt.

Fig. 9 zeigt die Darstellungen aus Fig. 8, wobei anstelle des Kompensationsgases die Gesamtmenge an Gas dargestellt ist, die während der unterschiedlichen experimentellen Beispiele dem Flugstromreaktor zugeführt wird. In der Darstellung I. in Fig. 9 sind die sechs Vergleichsbeispiele VB1 bis VB6 gezeigt. In den Darstellungen II., III., IV. und V. sind die Gesamtgasmengen gezeigt, die - bei den Beispielen B1 bis B5 (in II., B6 bis B8 (III.), B9 bis B11 (IV.) und B12 bis B15 (V.) - in Abhängigkeit von der Zeit in dem erfindungsgemäßen Vorrichtungssystem dem Flugstromreaktor zugeführt werden.

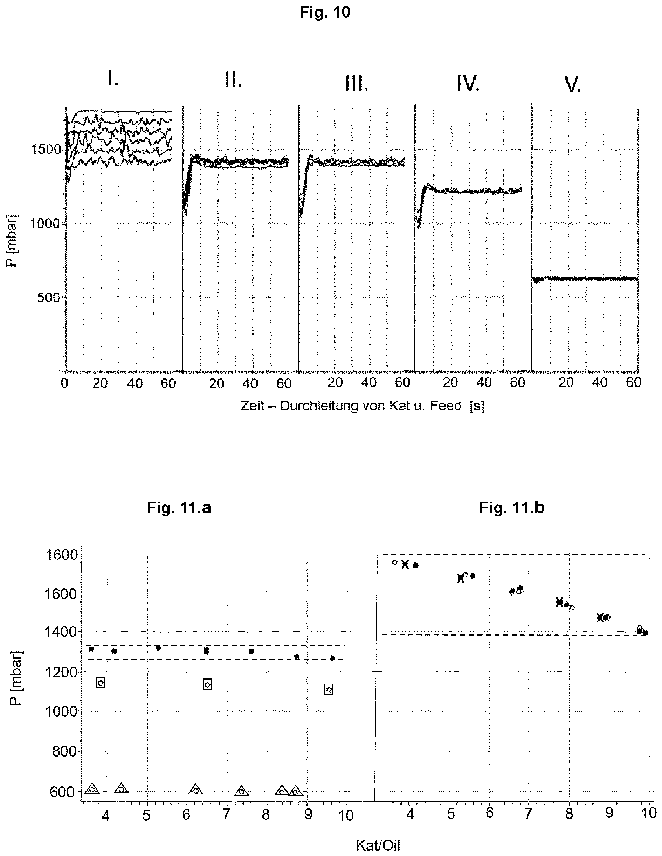

Fig. 10 zeigt die Darstellungen der Druckverläufe - und zwar jeweils des Partialdrucks des Kohlenwasserstofffeeds, der am Einlass des Flugstromreaktors bei den Untersuchungen über die Versuchsdauer berechnet wurde, die in Fig. 8 und Fig. 9 dargestellt sind. In der Darstellung I. in Fig. 10 sind Druckschwankungen zu erkennen, die bei den unterschiedlichen Vergleichsbeispielen (VB1 bis VB5) für das Verfahren nach dem Stand der Technik aufgezeichnet wurden. In den Darstellungen II., III., IV. und V. wurde das Verfahren gemäß der Erfindung durchgeführt, wobei der Druck nach einem sprunghaften Anstieg in einer Induktionsphase zu Beginn des Verfahrens einen konstanten Wert annimmt.

Fig. 11.a zeigt eine grafische Darstellung der Partialdruckwerte am Einlass des Flugstromreaktors als Funktion der Kat/Öl-Verhältnisse (engl. Cat/Oil ratio, kurz C/O) bei drei unterschiedlichen Druckniveaus (600 mbar, etwa 1130 mbar und etwa 1300 mbar) in Verbindung mit einer Durchführung des Verfahrens gemäß der vorliegenden Erfindung;

Fig. 11.b zeigt eine grafische Darstellung der Partialdruckwerte am Einlass des Flugstromreaktors als Funktion der Kat/Öl-Verhältnisse (engl. Cat/Oil ratio, kurz C/O) bei einer Durchführung Verfahrens nach dem Stand der Technik, wobei eine Druckänderung zu erkennen ist, die einen Zusammenhang zum Kat/Oil-Verhältnis aufweist;

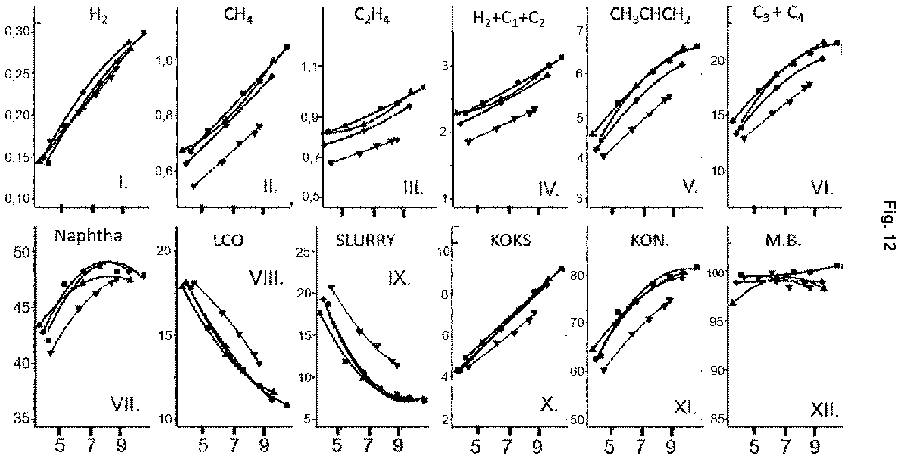

Fig. 12 zeigt grafische Darstellung von analytischen Daten - und zwar in Form von Ausbeuten an unterschiedlichen Produktkomponenten oder Produktfraktionen beziehungsweise Produktklassen sowie Konversion und Massenbilanz, wobei die analytischen Daten gegen die bei der Verfahrensdurchführung eingesetzten Katalysator-zu-Öl-Verhältnisse aufgetragen wurden (siehe Darstellungen I. bis XII. und Tabelle 3). Die Ergebnisse basieren auf den in Fig. 11.a gezeigten Beispielen. Der Partialdruck wurde in unterschiedlichen Durchläufen des Verfahrens variiert. Die Variation des Partialdrucks wurde in der Weise vorgenommen, dass jeweils der Partialdruck des Kohlenwasserstofffeeds am Einlass des Flugstromreaktors auf ein definiertes Druckniveau eingestellt wurde. Es wurden vier Serien mit Experimenten durchgeführt, wobei die ausgewählten Druckniveaus bei 600 mbar, bei etwa 1130 mbara und bei etwa 1300 mbar lagen.

Bei den Darstellungen der Vorrichtung, die in den Figuren gezeigt wird, werden illustrative Ausführungen der Vorrichtung gezeigt, die nur beispielhaft gezeigt werden. Es sind auch andere Kombinationen von einzelnen Strukturelementen möglich, die von den hier dargestellten Figuren abweichen. Beispielsweise ist in Fig. 5 eine Flüssigkeitszufuhr für zwei unterschiedliche Flüssigkeiten gezeigt, die mit zwei Pumpen und einer gemeinsamen Verdünnungsgaszufuhr ausgestattet ist. In einer anderen Ausführungsform, die auch bevorzugt ist, kann jede der beiden Flüssigkeitszufuhrleitungen mit einer eigenen Verdünnungsgaszufuhr ausgestattet sein.

In der Fig. 7 sind die Fluidströme gekennzeichnet, die bei der Durchführung des erfindungsgemäßen Verfahrens überwacht und kontrolliert werden, wobei die Vorrichtung mit einem Hopper ausgestattet ist, in den das Fluidisierungsgas (Strom D) eingespeist wird. Aus dem unteren Teil des Hoppers tritt pulverförmiges Material zusammen mit Fluidstrom aus, und zwar dem Strom C. Druckspitzen im Hopper werden durch die Ausgangsleitung über das Ventil 51 abgeleitet (siehe Strom E). Da Strom D und der Strom E durch die Mess- und Regeleinrichtung bestimmt werden, ist auch der Strom C bekannt, der aus der Differenz von Strom D und Strom E resultiert. Der Strom B dient der Überführung des pulverförmigen Materials vom Hopperausgang zum Flugstromreaktor, wobei bei der Durchführung des Verfahrens ein konstanter Strom B gewählt wird, der auch Transportgasstrom genannt wird. Im unteren Teil der Transferleitung vom Hopper zum Flugstromreaktor wird das Eduktfluid in die Transferleitung beziehungsweise in den Eingangsbereich des Flugstromreaktors geleitet. Beim Eduktfluid kann es sich um ein Gas handeln oder ein Gas in das eine Flüssigkeit hinein injiziert wird. Das bedeutet, beim Eduktfluid handelt es sich um ein zufließendes Gas beziehungsweise um einen gashaltiger Fluidstrom, der bei der Durchführung des Verfahrens mit konstanter Flussrate in den Flugstromreaktor zugeführt wird. Durch die Kontaktierung des gashaltigen Fluidstroms mit dem Fluidstrom, der pulverförmiges Material umfasst, können reaktive Prozesse auftreten, die zu einer Volumenänderung führen und die zu einer Änderung der Strömungsverhältnisse in der Zuführung zum Flugstromreaktor führen. Mittels der erfindungsgemäßen Vorrichtung werden sich ändernde Strömungsverhältnisse in Echtzeit erfasst und durch die Kompensationsgaszufuhr ausgeglichen, wobei die Kompensationsgaszufuhr in der Fig. 7 mit Strom A gekennzeichnet wurde. Das bedeutet, in der Fig. 7 ist es offen, ob es sich bei der Eduktgaszufuhr um eine Gaszuführung oder eine Flüssigkeitszuführung mit Verdampfungsgas handelt, wie diese beispielsweise in den Figuren 1 bis 5 eingezeichnet ist. In der Figur 6 ist eine Vorrichtung mit zwei Baueinheiten für die Zufuhr von unterschiedlichen Feeds gezeigt. Auch hierzu ist festzustellen, dass die Baueinheiten für die Zuführung von mehreren Feeds ganz unterschiedlich ausgestaltet sein können. Kennzeichnend ist jedoch, dass diese Vorrichtungsvarianten eine oder mehrere Baueinheiten für die Zuführung eine Verdampfungsgasleitung aufweisen, die nicht die Kompensationsgasleitung (Strom A in Fig. 7) ist. Die Kompensationsgasleitung (Strom A) ist mit Strom B, Strom D und Strom E gekoppelt und ermöglicht die Echtzeitkompensation gemäß Erfindung und wie zuvor näher ausgeführt bezüglich Echtzeit.

Dass die aufgenommenen Produktfluide und der im Separator aufgenommene Katalysator einer analytischen Charakterisierung unterzogen werden ist dem Fachmann aus dem Stand der Technik bekannt und bedarf somit keiner genaueren Ausführung. Da das Verfahren eine gewisse Flexibilität aufweist, was die Auswahl des Prozesses betrifft, lassen sich Anpassungen vornehmen. Sofern bei dem Verfahren nur leichtflüchtige Produktfluide entstehen, so können die Produktfluide im Gaszylinder unter Verzicht der Aufnahme von Produktfluid im Flüssigkeitsabscheider aufgesammelt werden.

**EP 4 534 193 B1**

Beispiele

Zur näheren Darstellung der erfindungsgemäßen Vorrichtung und des erfindungsgemäßen Verfahrens wurden mehrere Beispieluntersuchungen durchgeführt, zu denen eine Vorrichtung verwendet wurde, die in Fig. 4 dargestellt ist, wobei die Vorrichtung auch mehrere Elemente einer Prozessautomatisierung aufwies, wie diejenige Vorrichtung, die in der Fig. 6 gezeigt ist. Die für die Untersuchungen eingesetzte Vorrichtung war mit einem Flugstromreaktor ausgestattet, der eine Länge von 1,0 m und einen Innendurchmesser von 0,9 cm aufwies. Das obere Ende des Flugstromreaktors war durch eine als Vorheizstrecke ausgestaltete Verbindungsleitung mit der Ausgangsseite eines Hoppers verbunden. Der Hopper zur Aufnahme des partikelförmigen Feststoffkatalysators hatte ein Innenvolumen von 1,7 Litern und war mit Differenzdruckdosierer und zusätzlichem Vibrationsantrieb ausgestattet. Bei den Untersuchungen wurde der Rohrreaktor mittels einer Beheizungsvorrichtung auf einer Temperatur von 529 °C gelagert. Hopper und Vorheizstrecke wurden mittels Temperierungselementen bei einer Temperatur von 700 °C gelagert. Die Vergleichsuntersuchungen gemäß dem Stand der Technik wurden mit einer Vorrichtung durchgeführt, welche der in der WO 2019/020655 A1 in den Figuren 2.a und 2.d dargestellten Vorrichtung entsprach, somit ohne Einsatz von Differenzflussregler 25.

Sämtliche in den Beispielen gezeigten Umsetzungen im Flugstromreaktor wurden mit Katalysatormaterial aus der gleichen Charge und mit dem gleichen Einsatzöl durchgeführt. Die Untersuchungen wurden einem Gleichgewichtskatalysator (Equlibrium Catalyst oder E-Cat), der von einer Raffinerie zur Verfügung gestellt wurde, durchgeführt. Der E-Cat hatte eine Partikelgrößenverteilung im Bereich von 20 - 150 $\mu m$ und eine BET-Oberfläche von 220 $m^2/g$. Als Feed wurde ein Vakuumgasöl mit einer Siedeverteilung im Bereich von 210 - 600 °C, einem Koksrückstand von 0,2 Gew.-% sowie einer API-Dichte von 25 eingesetzt. Zunächst wurde die Injektioneinheit kalibriert, um das als Feed eingesetzte Öl mit einer konstanten Dosierrate von 7 g/min in den Reaktor zu injizieren. Die Durchführung des Verfahrens wurde mehrmals wiederholt, wobei das Katalysator-zu-Öl-Verhältnis oder der Partialdruck am Eingang des Flugstromreaktors variiert wurden, wobei die Einstellung des Katalysator-zu-Öl-Verhältnisses durch die Vorgabe und Variation der Dosierrate an zugeführtem Katalysator erfolgte, indem der Differenzdruckdosierer des Hoppers auf unterschiedliche Werte eingestellt wurde während der Gesamtdruck im Flugstromreaktor und Separator über den Rückdruckregler 31 und 33 bei 3 bar auf einem konstanten Niveau gehalten wurde, und zwar in sämtlichen Experimenten, die vorliegend beschreiben werden. Dabei wurde das Verfahren mit einer erfindungsgemäß ausgestalteten Vorrichtung gemäß der Erfindung durchgeführt und zum Vergleich wurden Experimente gemäß dem Stand der Technik durchgeführt. Der hier erwähnte Rückdruckregler 31 und 33 setzt sich zusammen aus dem Druckregelventil 31 und dem Druckregler 33, wobei die Messung und Regelung am Druckregler 33 erfolgt (siehe beispielsweise Fig. 2) und der Rückdruckregler 31 und 33 die hohe Regelgüte aufwies, die zuvor beschrieben wurde.

Bei allen hier dargestellten Beispielen (d.h. den Vergleichsbeispielen und den erfindungsgemäßen Beispielen) wurde das Verfahren in der Weise durchgeführt, dass die Dauer für das Durchleiten von Katalysator und Feed durch den Flugstromreaktor bei 60 Sekunden lag. Die Verweilzeit des Katalysators und des Öls im Flugstromreaktor lag im Bereich von etwa 1 bis 2,5 Sekunden. Der im Separator aufgenommene Katalysator wurde anschließend für eine Zeitdauer von mindestens 300 Sekunden mit Strippgas behandelt, um auf dem Katalysator anhaftende Produkte zu entfernen, die in den Flüssigkeitsabscheider oder Gassammelbehälter transferiert wurden. Der Separator wurde bei einer Temperatur von 480 °C gelagert und der Flüssigkeitsabscheider wurde bei einer Temperatur von -2 °C gelagert. Nach dem Beenden der katalytischen Umsetzung im Flugstromreaktor und dem Abstrippen der Komponenten in der Stripp-Phase wurden die gesammelten Gase und Flüssigkeiten einer quantitativen und qualitativen Analyse unterzogen. Als Strippgas wurde $N_2$ verwendet. Der im Separator aufgenommene Katalysator wurde in ein Probenaufnahmegefäß transferiert und danach einer Kohlenstoffanalyse unterzogen, um die Koksablagerung auf dem Katalysator zu quantifizieren. Vorteilhaft bei der Durchführung des Verfahrens war, dass die eingesetzte Vorrichtung mit einer Reihe von Sammelgefäßen (Flüssigkeitsabscheider, Gassammelgefäße und Probenaufnahmegefäße für Feststoff) ausgestattet war, sodass mehrere Beispieluntersuchungen in einer Serie automatisch durchgeführt wurden und die erfindungsgemäße Vorrichtung über einen Zeitraum von mehreren Stunden vollautomatisch betrieben werden konnte. Nach jeder Serie von Beispieluntersuchungen wurden sowohl die jeweiligen Massen der in den Flüssigabscheidern aufgenommenen Flüssigkeiten als auch die jeweiligen Massen des in den Probenaufnahmegefäßen aufgenommenen Katalysatormaterials durch Wägung bestimmt. Darüber hinaus wurden die Mengen an Gasvolumen bestimmt, die in den Gassammelgefäßen aufgefangen wurden.

In Fig. 8, Fig. 9 und Fig. 10 sind die experimentellen Parameter gezeigt, die während der Durchführung des Verfahrens von der Mess- und Regeleinrichtung aufgezeichnet wurden. Anhand der Prozessdaten lässt sich der Vorteil der Erfindung erkennen, der darin besteht, dass mittels der Zuführung von Kompensationsgas ein stabilerer stationärer Zustand während der Durchführung des erfindungsgemäßen Verfahrens erreicht werden kann gegenüber dem Stand der Technik. Der stabilere stationäre Zustand führt zu einer höheren Datenqualität und damit auch zu einer höheren Genauigkeit des erfindungsgemäßen Verfahrens. Außerdem kann der Partialdruck des Kohlenwasserstofffeeds am Einlass des Flugstromreaktors auf einen bestimmten Zielwert eingestellt werden. Bemerkenswert ist, dass der Beitrag des Kompensationsgases zu Beginn des Experimentes in den ersten Sekunden bis zur fünften beziehungsweise bis zur zehnten Sekunde des Verfahrens eine sprunghafte Änderung im Partialdruck des Kohlenwasserstofffeeds am Einlass des Flugstromreaktors bewirkt, der im Anschluss auf einen konstanten Wert eingeregelt wird, welcher im Gegensatz zu den Vergleichsbeispielen aus dem Stand der Technik unabhängig vom jeweiligen Katalysator/Öl-Verhältnis ist. Völlig unerwartet ist, dass der äußerst komplexe Regelmechanismus hier zur signifikanten Erhöhung der Genauigkeit führt, was anhand der Daten zu erkennen ist, die in Fig. 11 und Fig. 12 gezeigt sind.

Zunächst wird auf die Ergebnisse verwiesen, die in der Fig. 10 dargestellt sind. Bei einer Durchführung des erfindungsgemäßen Verfahrens und unter Veränderung des Kat/Oil-Verhältnisses weisen die am Einlass des Flugstromreaktors gemessenen Werte der Partialdrücke - nach einem sprunghaften Anstieg in den ersten Sekunden, welcher mit der Initiierung des Katalysatormassenstroms vom Hopper zusammenhängt - einen Verlauf mit geringen Amplituden und geringen zeitlichen Schwankungen auf, wie in Darstellungen II. bis V. zu erkennen ist. Bei einer Durchführung des Verfahrens mit einer Vorrichtung gemäß dem Stand der Technik weisen die gemessenen Partialdrücke in Darstellung I. sehr viel stärker ausgeprägte Amplituden und zeitlich größere Schwankungen auf, die mit steigendem Katalysator/Öl-Verhältnis eine Abnahme der Partialdrücke zeigen, wie dies in Fig. 11.b zu erkennen ist. Die Verminderung der Schwankungen mittels der erfindungsgemäßen Vorrichtung und des erfindungsgemäßen Verfahrens zeigen eindeutig, dass die experimentellen Verfahrensbedingungen mit einer höheren Genauigkeit über einen bestimmten Bereich von unterschiedlichen Katalysator/Öl-Verhältnissen kontrolliert werden können. Somit werden störende Effekte und Schwankungen, die mit einer Variation von Katalysator-zu-Öl-Verhältnissen verbunden sind, stärker unterdrückt beziehungsweise völlig ausgeschlossen. Dies lässt sich daran erkennen, dass die Auftragung der Experimente bei einem konstanten Druckwert in Fig. 11.a einen waagrechten Verlauf entlang der Druckwerte bei unterschiedlichen Katalysator-zu-Öl-Verhältnissen aufweist.

Die einzelnen Messpunkte werden zur Erzeugung oder Darstellung der Konversions- und Ausbeutekurven verwendet, durch welche die Ausbeutestruktur in Bezug auf die Prozessparameter, zu welchen auch die Feed- und Katalysatoreigenschaften zählen, dargestellt werden. Zur Vergleichbarkeit von unterschiedlichen Datensätzen ist es von Interesse die Darstellung der Ausbeutestruktur in Bezug auf unterschiedliche Prozessgrößen visuell darzustellen oder zu berechnen. Neben der Bestimmung beziehungsweise der Darstellung der Ausbeutestruktur als Funktion des Katalysator-zu-Öl-Verhältnisses, ist die Darstellung der Ausbeutestruktur als Funktion der Konversion und die Darstellung der Ausbeutestruktur als Funktion der Koksabscheidung auf dem Katalysator von Bedeutung. Die erfindungsgemäße Verbesserung des Flugstromreaktors im Labor führt dazu, dass die erzielte Datenqualität noch bessere Übereinstimmung mit FCC-Anlagen zeigt, die großtechnisch betrieben werden. Außerdem können verschiedene Feeds mit unterschiedlichen Eigenschaften, wie zum Beispiel unterschiedlichem mittlerem Molgewicht, bei Bedingungen untersucht werden, die untereinander besser vergleichbar sind, also beispielsweise bei konstantem Partialdruck am Reaktoreinlass. Darüber hinaus können die Untersuchungen in einem experimentellen Parameterraum durchgeführt werden, der über die Betriebsparameter der großtechnisch betriebenen FCC-Anlagen hinausgeht, was dadurch auch ein Mittel bereitstellt, um Simulationen zu FCC-Anlagen und Prozessen zu machen, die bisher in dieser Weise noch nicht im großtechnischen Betrieb zum Einsatz gekommen sind. Die Erweiterung und verbesserte Kontrollierbarkeit des experimentellen Parameterraums ist dadurch gegeben, dass die erfindungsgemäße Vorrichtung und das erfindungsgemäße Verfahren mit der Rückdruckregelung gekoppelt ist beziehungsweise mit der Rückdruckdruckregelung gekoppelt werden kann.

Den Reaktoren von großtechnischen FCC-Anlagen werden die Katalysatoren und die Feeds in einem kontinuierlichen Prozess zugeführt und es ist auch bemerkenswert, dass sich dieser großtechnische Prozess in einem sehr kurzen Zeitbereich nachstellen lässt, da in den vorliegenden Experimenten bereits eine Dauer von 60 Sekunden ausreicht, um einen stationären Zustand zu erreichen. Auch Zeiten unterhalb von 60 Sekunden sind möglich, wobei die Zeitdauer von Eigenschaften von Katalysator und Feed sowie von Prozessparametern abhängt.

Als Messgerät für die Gas- und Flüssigkeitsanalysen wurden GC-Messgeräte der Firma Agilent eingesetzt. Die Analysenmethode ist bekannt und wurde in anderen Veröffentlichungen beschrieben. Für die Analyse der flüssigen Produktproben wurde eine simulierte Destillation nach ASTM D 2887 eingesetzt. Zur Quantifizierung der Koksablagerungen auf dem Katalysatormaterial kam als Kohlenstoffanalysator ein Gerät CS744 von Leco Instrumente GmbH zum Einsatz.

Tabelle 2 mit einer Übersicht der experimentellen Beispiele, die in Fig. 11.a und Fig.11.b gezeigt sind, und zwar in Fig. 11.a gemäß der Erfindung und in Fig.11.b gemäß dem Stand der Technik.

Tabelle 2 mit einer Zusammenfassung der durchgeführten Beispiele, die in Fig. 11.a und Fig. 11.b gegeben sind.

| Serie Nr. | Anzahl an Krackungen | Katalysator/Öl-Verhältnisse [g/g] | Mittelwert Partialdruck [mbar] | Standardabweichung Partialdruck [mbar] |
|---|---|---|---|---|
| SN1 (Fig. 11.a) | 6 | 3,6; 4,4; 6,2; 7,4; 8,4; 8,7 | 600 | 6 |
| SN2 (Fig. 11.a) | 3 | 3,8; 6,5; 9,5 | 1128 | 14 |

(fortgesetzt)

| Serie Nr. | Anzahl an Krackungen | Katalysator/Öl-Verhältnisse [g/g] | Mittelwert Partialdruck [mbar] | Standardabweichung Partialdruck [mbar] |
|---|---|---|---|---|
| SN3 (Fig. 11.a) | 3 | 3,6; 6,4; 9,6 | 1292 | 19 |
| SN4 (Fig. 11.a) | 5 | 4,2; 5,2; 6,4; 7,6; 8,7 | 1301 | 15 |
| | Σ 17 | | | |
| VSN1, VSN2, VSN3, VSN4 (Fig. 11.b) | Σ 24 | | 1570 | 114 |

In der Fig. 12 sind die Ergebnisse dargestellt, die bei der analytischen Charakterisierung der unterschiedlichen Produktfluidströme und der Katalysatoren nach der Durchführung des Verfahrens erzielt wurden. Eine zusammenfassende Übersicht zu den einzelnen grafischen Darstellungen ist in der Tabelle 3 gegeben.

Tabelle 3 mit einer zusammenfassenden Übersicht zu den Ergebnissen der analytischen Charakterisierung, die bei unterschiedlichen Durchführungen des erfindungsgemäßen Verfahrens erzielt wurden.

| | Darstellung | Ergebnisgröße | Einheit |
|---|---|---|---|
| 1 | I. | Ausbeute $H_2$ | Gew.-% |
| 2 | II. | Ausbeute $CH_4$ | Gew.-% |
| 3 | III. | Ausbeute $C_2H_4$ | Gew.-% |
| 4 | IV. | Ausbeute $H_2 + C_1 + C_2$ | Gew.-% |
| 5 | V. | Ausbeute $CH_3CHCH_2$ (Propen) | Gew.-% |
| 6 | VI. | Ausbeute $C_3 + C_4$ (LPG) | Gew.-% |
| 7 | VII. | Ausbeute Naphtha bzw. Benzin | Gew.-% |
| 8 | VIII. | Ausbeute LCO bzw. Light Cycle Öl | Gew.-% |
| 9 | IX. | Ausbeute Slurry (Rückstandsöl) | Gew.-% |
| 10 | X. | Ausbeute Koks auf dem Katalysator | Gew.-% |
| 11 | XI. | Kon. bzw. Konversion | Gew.-% |
| 12 | XII. | M.B. bzw. Massenbilanz | Gew.-% |

Die in Fig. 12 und Tab. 3 gezeigten Ergebnisse korrespondieren zu den Durchführungen der Untersuchungen, die in der Fig. 11.a gezeigt sind. Bezüglich der Legende in den Darstellungen in der Fig. 12 sind die Symbole Dreieck und Viereck dargestellt, die entweder auf der Spitze oder auf der Seitenfläche stehen.

Die Daten der Serie SN1 (bei 600 mbar absolut Partialdruck am Einlass des Flugstromreaktors) werden durch die Punkte gegeben, die das auf der Spitze stehende Dreieck zeigen, und die Daten der Serie SN2 (bei etwa 1130 mbar absolut Partialdruck am Einlass des Flugstromreaktors) werden durch die Punkte wiedergegeben, die das auf der Spitze stehende Viereck zeigen. Das auf der Seite stehende Viereck und das auf der Seite stehende Dreieck zeigen die Ergebnisse der Serien SN3 und SN4 (bei etwa 1300 mbar absolut Partialdruck am Einlass des Flugstromreaktors).

Die Ergebnisse in Fig. 12 zeigen eine sehr klare Rangfolge in den einzelnen grafischen Darstellungen in Bezug auf Propen (Fig. 12, V.), Drygas (Fig. 12, IV.), Ethen (Fig. 12, III.), $C_3+C_4$ (Fig. 12, VI.) und Naphtha (Fig. 12., VII.). Auch bei Methan (Fig. 12, II.), Light Cycle Öl (Fig. 12, VIII.), Slurry (Fig. 12, IX.), Koks (Fig. 12, X.) und Konversion (Fig. 12, XI.) sind die Daten der Serie SN1 klar von den Serien SN2, SN3 und SN4 differenziert. Die gefundene Abstufung steht in Zusammenhang mit dem Einlasspartialdruck, der mittels des erfindungsgemäßen Verfahrens einer verbesserten Kontrolle unterliegt gegenüber dem Stand der Technik. Im Stand der Technik war die Differenzbarkeit bisher in dieser Weise nicht gegeben. Bei Drygas handelt es sich um die Summe aus Wasserstoff, Methan und Ethan.

Bezugszeichenliste:

| 7 | Gaszufuhr zum Hopper / Hoppergaszufuhr |
|---|---|
| 8 | Schaltventil |
| 9 | Verbindung |
| 11 | Hopper |
| 12 | Hopperunterseite mit gasdurchlässigem kegelförmigem Element |
| 13 | Flugstromreaktor |
| 14 | Verdampfungsgaszufuhr |
| 15 | Flüssigkeitspumpe, vorzugsweise Hochdruckpumpe |
| 16 | Verbindungsleitung vom Feedbehälter zur Pumpe |
| 17 | Separator |
| 18 | Feedbehälter |
| 19 | Eduktzufuhr |
| 21 | Kompensationsgaszufuhr |
| 23 | Transportgaszufuhr |
| 24 | Flussregler (FIC) |
| 25 | Differenzflussregler (DFC) |
| 26 | Mehrwegeventil |
| 27 | Flüssigkeitsabscheider |
| 29 | Temperierungsvorrichtung, vorzugsweise Kühler |
| 30 | Flüssigkeitsabscheider mit Kühlvorrichtung |
| 31 | Druckregelventil |
| 33 | Druckregler (PIC) |
| 35 | Drucksensor (PI) |
| 41 | Druckregelventil |
| 42 | Verbindungsleitung vom Separator zum Differenzdruckregler |
| 43 | Druckregler (PIC) |
| 45 | Differenzdruckmesser (DPI) |
| 46 | Differenzdruckregler (DPIC) |
| 47 | Separatorgaszufuhr |
| 48 | Flussregler Separator (FIC) |
| 51 | Schaltventil |
| 53 | Überdruckabfuhr |
| 55 | Flusssensor |
| 61 | Mehrwegeventil |
| 63 | Probengefäß |
| 71 | Vorheizstrecke zur Beheizung der Verbindung |
| 72 | Feststoffaufnahme |
| 73 | Transferleitung in Feststoffaufnahme |
| 74 | Kohlenstoffanalysator |
| 78 | Flüssigprobenanalysator |
| 79 | Gasanalysator |
| 91 | Baueinheit mit erster Feedzuführung |
| 92 | Baueinheit mit zweiter Feedzuführung |

**Patentansprüche**

1. Vorrichtung zur Untersuchung von chemischen Prozessen, umfassend einen Hopper (11), einen Flugstromreaktor (13), verknüpft durch eine Verbindung (9) mit dem Hopper (11) und durchströmbar für aus dem Hopper (11) kommendem partikelförmigem Material, und eine Eduktzufuhr (19) sowie eine Mess- und Regeleinrichtung, wobei stromab des Flugstromreaktors (13) ein Separator (17) zur Abtrennung des partikelförmigen Materials von einem kondensierbare Dämpfe enthaltenden Reaktionsprodukt angeordnet ist und stromab des Separators (17) ein Probengefäß (63) zur Aufnahme von Reaktionsprodukt, wobei die Vorrichtung **dadurch gekennzeichnet ist, dass** die Verbindung (9) von Hopper (11) mit dem Flugstromreaktor (13) eine Kompensationsgaszufuhr (21) mit einem Differenzflussregler (25) umfasst, der mit der Mess- und Regeleinrichtung der Vorrichtung in der Weise gekoppelt ist, dass die Flussströme der zugeführten und abgeleiteten Gasströme durch die Mess- und Regeleinrichtung erfasst und durch die Kompensationsgaszufuhr (21) ausgeglichen werden können.

2. Vorrichtung zur Untersuchung von chemischen Prozessen nach Anspruch 1, wobei stromab des Separators (17) ein Flüssigkeitsabscheider zur Abtrennung von flüssigen Bestandteilen angeordnet ist und stromab des Flüssigkeitsabscheiders (27) das Probengefäß (63) angeordnet ist.

3. Vorrichtung zur Untersuchung von chemischen Prozessen gemäß Anspruch 1 oder Anspruch 2, wobei die Kompensationsgaszufuhr mit einem Drucksensor (35) verbunden ist, stromab des Flüssigkeitsabscheiders (27) oder stromab des Separators (17), sofern die Vorrichtung keinen Flüssigkeitsabscheider (27) aufweist, ein Druckregelventil (31) angeordnet ist, weiter vorzugsweise ist das Druckregelventil (31) mit dem Drucksensor (35) verbunden, wobei es bevorzugt ist, dass der Messwert des Drucksensors (35) zur Regelung des Druckregelventils (31) dient.

4. Vorrichtung gemäß einem der Ansprüche 1 bis 3, wobei der Hopper und der Separator eine Wirkverbindung (42) aufweisen, die ein kontinuierlich wirkendes Druckregelventil (41) ansteuert, über welches ein Differenzdruck zwischen Hopper und Separator eingestellt wird.

5. Vorrichtung gemäß einem der Ansprüche 1 bis 4, die **dadurch gekennzeichnet ist, dass** der Flugstromreaktor (13) rohrförmig ausgestaltet ist, wobei das Rohr eine Länge im Bereich von 0,3 bis 3 m und einen Durchmesser im Bereich von 3 bis 100 mm aufweist.

6. Vorrichtung gemäß einem der Ansprüche 1 bis 5, die **dadurch gekennzeichnet ist, dass** der untere Teil des Hoppers (11) ein trichterförmiges Element (12) aufweist, weiter vorzugsweise umfasst das trichterförmige Element (12) einen porösen Bereich, durch den Gas in den Hopper eingeführt werden kann, welches eine Fluidisierung des im Hopper (11) enthaltenen partikelförmigen Materials bewirkt, weiter vorzugsweise weist der Hopper (11) ein Innenvolumen auf, das im Bereich von 0,5 bis 10 L liegt, darüber hinaus bevorzugt liegt das Volumen im Bereich von 0,5 bis 5 L.

7. Vorrichtung gemäß einem der Ansprüche 1 bis 6, **dadurch gekennzeichnet, dass** der Hopper (11) und der Flugstromreaktor (13) mit Beheizungsvorrichtungen ausgestattet sind und die Verbindung (9) von Hopper mit Flugstromreaktor mit einer Vorheizstrecke (71) ausgestattet ist, weiter vorzugsweise sind die Elemente aus der Gruppe Separator (17), Flüssigkeitsabscheider (27) und Probengefäß (63) mit Temperierungsvorrichtungen ausgestattet.

8. Vorrichtung gemäß einem der Ansprüche 1 bis 7, **dadurch gekennzeichnet, dass** der Separator mit einer Strippgaszufuhr (47) ausgestattet ist, weiter vorzugsweise ist der Separator mit einem Sammelsystem für partikelförmiges Material ausgestattet, vorzugsweise weist das Sammelsystem zwei bis zehn Probensammelgefäße (72, 72') auf.

9. Verfahren zur Untersuchung von chemischen Prozessen in einer Vorrichtung, die gemäß einem der zuvor genannten Ansprüche 1 bis 8 aufgebaut ist, wobei das Verfahren die nachfolgenden Schritte umfasst:

   i) partikelförmiges Material wird vom Hopper (11) kommend mit Transportgas durch die Verbindung zum Eingang eines Flugstromreaktors (13) geleitet;
   ii) Eduktstrom wird zum Eingang des Flugstromreaktors (13) geleitet, wobei der Eduktstrom mit dem partikelhaltigen Gasstrom in Kontakt gebracht und durchmischt wird;
   iii) die Mischung von partikelhaltigem Gasstrom und Eduktstrom wird durch den Flugstromreaktor (13) in einen Separator (17) geleitet;
   iv) im Separator wird das partikelförmige Material abgeschieden und die gasförmigen Komponenten zu einer Ausgangsleitung geführt, wobei kondensierbare Komponenten in einem Flüssigkeitsabscheider (27) und nicht kondensierbare in einem Probengefäß (63) gesammelt und einer analytischen Charakterisierung zugeführt werden;

   bei der Durchführung der Schritte i) bis iii) des Verfahrens weisen der partikelhaltige Gasstrom und der Eduktstrom jeweils einen vorgegebenen Massenstrom auf; wobei die Durchführung der Schritte i) bis iii) des Verfahrens bei den vorgegebenen Massenströmen im Zeitbereich von 10 bis 500 Sekunden liegt und die Durchführung von Schritt iv) des Verfahrens im Zeitbereich von 150 bis 1200 Sekunden liegt, vorzugsweise liegt die Dauer von Schritt iv) im Zeitbereich von 200 bis 600 Sekunden, darüber hinaus bevorzugt im Zeitbereich von 250 bis 500 Sekunden.

10. Verfahren zur Untersuchung von chemischen Prozessen mit einem Flugstromreaktor gemäß dem Anspruch 9, wobei bei der Durchführung die Durchführung der Schritte wie nachfolgend erfolgt:

   - das im Hopper (11) gelagerte partikelförmige Material wird mittels positiven Differenzdrucks vom Hopper (11) in die Verbindungsleitung (9) transferiert und bei der Durchführung von Schritt i) werden der Flussstrom des Transportgases, der Flussstrom der Hoppergaszufuhr und der Flussstrom der Überdruckabfuhr des Hoppers erfasst;

- bei der Durchführung des Schritt ii) wird der Flussstrom des Eduktstroms erfasst;

- die bei den Verfahrensschritten i) und ii) erfassten Flussströme werden in Beziehung gesetzt und die Abweichungen von vorgegebenen Zielwerten werden durch eine Zufuhr von Kompensationsgas ausgeglichen.

11. Verfahren zur Untersuchung von chemischen Prozessen mit einem Flugstromreaktor (13) nach Anspruch 9 oder Anspruch 10, wobei das Verfahren bei einem Druck im Bereich von 0,5 bis 10 bara, vorzugsweise bei einem Druck im Bereich von 1,0 bis 7,5 bara, besonders bevorzugt bei einem Druck im Bereich von 1,0 bis 6 bara durchgeführt wird, oder wobei der Flugstromreaktor 13 bei einer Temperatur im Bereich von 100 bis 950 °C temperiert wird oder wobei das Verfahren bei einem Druck im Bereich von 0,5 bis 10 bara und einer Temperatur des Flugstromreaktors im Bereich von 100 bis 950 °C durchgeführt wird.

12. Verfahren zur Untersuchung von chemischen Prozessen mit einem Flugstromreaktor (13) nach einem der Ansprüche 9 bis 11, wobei das partikelförmige Material einen Fluid- oder FCC-Katalysator umfasst und wobei das Verfahren mit zumindest einem flüssigen Feed durchgeführt wird, wobei das Verhältnis von Katalysator zu flüssigem Feed, das sogenannten Kat/Feed-Verhältnis, in einem Bereich von 1/1 bis 100/1 liegt, vorzugsweise liegt das Kat/Feed-Verhältnis in einem Bereich von 3/1 bis 50/1, darüber hinaus bevorzugt liegt das das Kat/Feed-Verhältnis in einem Bereich von 4/1 bis 25/1.

13. Verfahren zur Untersuchung von chemischen Prozessen mit einem Flugstromreaktor (13) nach Anspruch 12, wobei die Verfahrensschritte mehrfach durchgeführt werden, wobei bei den Wiederholungen des Verfahrens zumindest ein Prozessparameter der ausgewählt ist aus der Gruppe Kat/Feed-Verhältnis, Temperatur, Druck, Feed, Zusammensetzung des Feeds, Partialdruck des Feeds, sofern dieses verdampfbar ist, oder die Konzentration des Feeds im Eingangsbereich des Flugstromreaktors, Katalysator, Additiv verändert wird, wobei ein Prozessparametersatz generiert wird; vorzugsweise wird das Verfahren zumindest dreimal in Serie durchgeführt, wobei bei dem Prozessparametersatz das Kat/Feed-Verhältnis verändert wird.

14. Verfahren zur Untersuchung von chemischen Prozessen mit einem Flugstromreaktor (13) nach einem der Ansprüche 9 bis 13, wobei bei der Durchführung des Verfahrens eine oder mehrere Eduktkomponenten eingesetzt werden, die ausgewählt sind aus der Gruppe Erdöle, Öle, Schweröle, Gasöle, Vakuumgasöle, Rückstandsöle, Pflanzenöle, Fette, Fettsäuren, Triglyceride, Lipide, Bioöle, Pyrolysekondensate, Hydrothermalöle, Pyrolyseöle, Torföl, Tallöl, Lignin, Benzin, Diesel, Naphtha, Polymerschmelzen, Paraffinöle, Wachsschmelzen, Zuckerlösungen, Kohlenhydratlösungen, flüssige organische Extrakte, Terpentin, Harze, Teeröle, Pech.

15. Computerprogramm zur Steuerung einer Vorrichtung zur Untersuchung von chemischen Prozessen mittels Flugstromreaktor (13), die die Merkmale gemäß einer der Ansprüche 1 bis 8 aufweist oder ein Computerprogramm zur Durchführung eines Verfahrens in Verbindung einer Vorrichtung, die einen Flugstromreaktor umfasst (13) gemäß einem der Ansprüche 9 bis 14.

**Claims**

1. A device for the investigation of chemical processes, comprising a hopper (11), a entrained current reactor (13), linked by a connection (9) to the hopper (11) and permeable for particulate material coming from the hopper (11), and an educt supply (19) as well as a measuring and control device, wherein downstream of the entrained flow reactor (13) a separator (17) is arranged for separating the particulate material from a reaction product containing condensable vapours, and downstream of the separator (17) a sample vessel (63) for receiving reaction product, wherein the apparatus is **characterized in that** the connection (9) of hopper (11) with the entrained current reactor (13) is a compensatory gas supply (21) with a differential flow regulator (25), which is coupled with the measuring and regulating device of the device in such a way that the flux flows of the supplied and discharged gas flows can be recorded by the measuring and regulating device and offset by the compensatory gas supply (21).

2. An apparatus for the investigation of chemical processes according to claim 1, wherein downstream of the separator (17) a liquid separator for the separation of liquid components is arranged and downstream of the liquid separator (27) the sample vessel (63) is arranged.

3. An apparatus for investigating chemical processes according to claim 1 or claim 2, wherein the compensating gas supply is connected to a pressure sensor (35), downstream of the liquid separator (27) or downstream of the separator (17), provided that the apparatus does not have a liquid separator (27), a pressure regulating valve (31) is arranged, furthermore preferably the pressure regulating valve (31) is connected to the pressure sensor (35), wherein it is preferred, that the measured value of the pressure sensor (35) is used to control the pressure regulating valve (31).

4. The apparatus according to any one of claims 1 to 3, wherein the hopper and the separator have an active connection (42) which controls a continuously acting pressure regulating valve (41) by means of which a differential pressure between hopper and separator is set.

5. A device according to any one of claims 1 to 4, which is **characterized in that** the entrained current reactor (13) is tubular in design, the tube having a length in the range of 0.3 to 3 m and a diameter in the range of 3 to 100 mm.

6. An apparatus according to any one of claims 1 to 5, which is **characterized in that** the lower part of the hopper (11) has a funnel-shaped element (12), furthermore preferably, the funnel-shaped element (12) comprises a porous region through which gas can be introduced into the hopper, which causes fluidization of the particulate material contained in the hopper (11), furthermore preferably, the hopper (11) has an internal volume, which is in the range of 0.5 to 10 L, beyond that the volume is preferably in the range of 0.5 to 5 L.

7. An apparatus according to any one of claims 1 to 6, **characterized in that** the hop-per (11) and the entrained current reactor (13) are equipped with heating devices and the connection (9) of hopper with the entrained current reactor is equipped with a preheating section (71), furthermore preferably the elements from the group separator (17), liquid separator (27) and sample vessel (63) are equipped with temperature control devices.

8. An apparatus according to any one of claims 1 to 7, **characterized in that** the separator is equipped with a stripping gas supply (47), furthermore preferably the separator is equipped with a collection system for particulate material, preferably the collection system has two to ten sample collection vessels (72, 72').

9. A method for investigating chemical processes in an apparatus constructed according to any one of the aforementioned claims 1 to 8, wherein the method comprises the following steps:

   i) particulate material coming from the hopper (11) is passed by transport gas through the connection to the inlet of a drenge-flow reactor (13);
   ii) The reactant current is directed to the entrance of the entrained current reactor (13), whereby the reactant current is brought into contact with the particle-containing gas stream and mixed;
   iii) the mixture of particulate-containing gas flow and reactant current is passed through the entrained current reactor (13) into a separator (17);
   iv) in the separator, the particulate material is separated and the gas-shaped components are led to an output line, whereby condensable components are collected in a liquid separator (27) and non-condensable components in a sample vessel (63) and fed to analytical characterization;

   when steps (i) to (iii) of the method are carried out, the particulate-containing gas flow and the reactant current each have a predetermined mass flow; wherein the execution of steps (i) to (iii) of the method is in the time range of 10 to 500 seconds at the specified mass flows and the execution of step (iv) of the method is in the time range of 150 to 1200 seconds, preferably the duration of step (iv) is in the time range of 200 to 600 seconds, and beyond that preferably in the time range of 250 to 500 seconds.

10. A method for investigating chemical processes with a entrained current reactor according to claim 9, wherein the steps are carried out as follows:

   - the particulate material stored in the hopper (11) is transferred from the hopper (11) to the connecting pipe (9) by means of positive differential pressure, and during the execution of step (i), the flux flow of the transport gas, the flow flow of the hopper gas supply and the flow flow of the overpressure discharge of the hopper are recorded;
   - when performing step ii), the flow of the reactant current is recorded;
   - the flux flows recorded in the process steps i) and ii) are related and the deviations from specified target values are compensated for by a supply of compensation gas.

11. A method for investigating chemical processes using a draught reactor (13) according to claim 9 or claim 10, wherein the method is carried out at a pressure in the range of 0.5 to 10 bara, preferably at a pressure in the range of 1.0 to 7.5 bara, especially preferably at a pressure in the range of 1.0 to 6 bara, or wherein the entrained current reactor 13 is tempered at a temperature in the range of 100 to 950 °C, or wherein the method is carried out at a pressure in the range of 0.5 to 10 bara and a temperature of the entrained flow reactor in the range of 100 to 950 °C.

12. A method for investigating chemical processes using a entrained current reactor (13) according to any one of claims 9 to 11, wherein the particulate material comprises a fluid or FCC catalyst and wherein the method is carried out with at least one liquid feed, wherein the ratio of catalyst to liquid feed, the so-called cat/feed ratio, is in the range of 1/1 to 100/1, Preferably, the cat/feed ratio is in a range of 3/1 to 50/1, and the cat/feed ratio is preferably in a range of 4/1 to 25/1.

13. A method for investigating chemical processes with a entrained current reactor (13) according to claim 12, wherein the method steps are carried out several times, wherein at least one process parameter is selected from the group cat/feed ratio, temperature, pressure, feed, composition of the feed, partial pressure of the feed, if it is evaporatable, or the concentration of the feed in the input area of the entrained current reactor, catalyst, additive is changed, in which a process parameter set is generated; Preferably, the procedure is carried out at least three times in a row, whereby the cat/feed ratio is changed in the process parameter set.

14. A method for the investigation of chemical processes with a drift reactor (13) according to any one of claims 9 to 13, wherein one or more reactant components selected from the group of petroleum oils, oils, heavy oils, gas oils, vacuum gas oils, residue oils, vegetable oils, fats, fatty acids, triglycerides, lipids, bio oils, pyrolysis condensates, hydrothermal oils, pyrolysis oils, peat oil, tall oil, lignin, gasoline, diesel, naphtha, Polymer melts, paraffin oils, wax melts, sugar solutions, carbohydrate solutions, liquid organic extracts, turpentine, resins, tar oils, pitch.

15. A computer program for controlling an apparatus for the investigation of chemical processes by means of an entrained current reactor (13) having the characteristics specified in any one of claims 1 to 8 or a computer program for carrying out a method in combination with an apparatus comprising a entrained current reactor (13) according to any one of claims 9 to 14.

## Revendications

1. Un dispositif pour l'étude des procédés chimiques, comprenant une trémie (11), un réacteur à courant entraîné (13), relié par une connexion (9) à la trémie (11) et perméable pour les particules provenant de la trémie (11), ainsi qu'une alimentation d'éducation (19) ainsi qu'un dispositif de mesure et de contrôle, où, en aval du réacteur à flux entraîné (13), un séparateur (17) est installé pour séparer les particules d'un produit de réaction contenant des vapeurs condensables, et En aval du séparateur (17) un réservoir d'échantillon (63) pour le produit récepteur de réaction, où l'appareil est **caractérisé par** la connexion (9) de la trémie (11) avec le réacteur à courant entraîné (13) est une alimentation gazeuse compensatoire (21) avec un régulateur de débit différentiel (25), qui est couplé avec le dispositif de mesure et de régulation de l'appareil de manière à ce que les flux des flux de gaz fourni et déchargé puissent être enregistrés par l'appareil de mesure et de régulation et compensés par l'approvisionnement en gaz compensatoire (21).

2. Un appareil pour l'étude des procédés chimiques selon l'affirmation 1, dans lequel en aval du séparateur (17) un séparateur liquide pour la séparation des composants liquides est disposé et en aval du séparateur liquide (27) le récipient échantillon (63) est installé.

3. Un appareil pour étudier les procédés chimiques selon la revendication 1 ou la revendication 2, où l'alimentation en gaz compensateur est connectée à un capteur de pression (35), en aval du séparateur de liquide (27) ou en aval du séparateur (17), à condition que l'appareil ne dispose pas d'un séparateur de liquide (27), qu'une vanne régulatrice de pression (31) soit installée, de préférence que la vanne régulatrice de pression (31) soit connectée au capteur de pression (35), où il est préférable, que la valeur mesurée du capteur de pression (35) est utilisée pour contrôler la vanne régulatrice de pression (31).

4. L'appareil, selon l'une des revendications 1 à 3, où la trémie et le séparateur ont une connexion active (42) qui contrôle une vanne régulatrice de pression à action continue (41) par laquelle une différence de pression entre la trémie et le séparateur est réglée.

**5.** Un dispositif selon l'une des revendications 1 à 4, **caractérisé par le fait que** le réacteur à courant entraîné (13) est de conception tubulaire, le tube ayant une longueur comprise entre 0,3 et 3 m et un diamètre compris entre 3 et 100 mm.

**6.** Un appareil selon l'une des revendications 1 à 5, **caractérisé par le fait que** la partie inférieure de la trémie (11) possède un élément en forme d'entonnoir (12), de préférence l'élément en forme d'entonnoir (12) comprend une région poreuse par laquelle du gaz peut être introduit dans la trémie, ce qui provoque la fluidification des particules contenues dans la trémie (11), de préférence que la trémie (11) ait un volume interne, qui se situe entre 0,5 et 10 L, au-delà de cela le volume est de préférence entre 0,5 et 5 L.

**7.** Un appareil, selon l'une des revendications 1 à 6, **caractérisé par le fait que** le réacteur à courant suspendu (11) et le réacteur à courant suspendu (13) sont équipés de dispositifs de chauffage et que la connexion (9) de la trémie avec le réacteur à courant suspendu est équipé d'une section de préchauffage (71), de préférence les éléments du séparateur de groupe (17), du séparateur liquide (27) et du récipient d'échantillonnage (63) sont équipés de dispositifs de contrôle de température.

**8.** Un appareil selon l'une des revendications 1 à 7, **caractérisé par** le séparateur équipé d'une alimentation en gaz de dégainage (47), de préférence le séparateur est équipé d'un système de collecte de particules ; de préférence le système de collecte comporte de deux à dix cuves de collecte d'échantillons (72, 72').

**9.** Une méthode pour étudier les processus chimiques dans un appareil construite selon l'une des affirmations 1 à 8 mentionnées ci-dessus, dans laquelle la méthode comprend les étapes suivantes :

   i) Les particules partant de la trémie (11) sont acheminées par un gaz de transport via la connexion à l'entrée d'un réacteur à écoulement de drogue (13) ;
   ii) Le courant réactif est dirigé vers l'entrée du réacteur à courant entraîné (13), où le courant réactif est amené en contact avec le flux gazeux contenant des particules et mélangé ;
   iii) Le mélange de flux de gaz contenant des particules et de courant réactif est fait passer à travers le réacteur à courant entraîné (13) jusqu'à un séparateur (17) ;
   iv) Dans le séparateur, les particules sont séparées et les composants en forme de gaz sont conduits à une conduite de sortie, où les composants condensables sont collectés dans un séparateur liquide (27) et les composants non condensables dans un récipient d'échantillonnage (63) et envoyés à la caractérisation analytique ;

   Lorsque les étapes (i) à (iii) de la méthode sont effectuées, le flux de gaz contenant des particules et le courant du réactif ont chacun un débit massique prédéterminé ; où l'exécution des étapes (i) à (iii) de la méthode se situe dans une plage de temps de 10 à 500 secondes aux débits massiques spécifiés et que l'exécution de l'étape (iv) de la méthode se déroule dans une plage de temps de 150 à 1200 secondes, de préférence la durée de l'étape (iv) dans une plage de temps de 200 à 600 secondes, et au-delà de cette période, de préférence dans la plage de temps de 250 à 500 secondes.

**10.** Une méthode pour étudier des procédés chimiques avec un réacteur à courant entraîné selon la revendication 9, où les étapes sont réalisées comme suit :

   - Le matériau particulaire stocké dans la trémie (11) est transféré de la trémie (11) au tuyau de raccordement (9) au moyen d'une pression différentielle positive, et lors de l'exécution de l'étape (i), le flux du gaz de transport, le débit du gaz de trémie et le débit de surpression de la trémie sont enregistrés ;
   - lors de l'exécution de l'étape ii), le flux du courant réactif est enregistré ;
   - Les flux enregistrés lors des étapes du procédé i) et ii) sont liés et les écarts par rapport aux valeurs cibles spécifiées sont compensés par un apport de gaz de compensation.

**11.** Une méthode pour étudier des procédés chimiques utilisant un réacteur à tirant d'eau (13) selon la revendication 9 ou la revendication 10, dans laquelle la méthode est réalisée à une pression comprise entre 0,5 et 10 bara, de préférence à une pression comprise entre 1,0 et 7,5 bara, surtout de préférence à une pression comprise entre 1,0 et 6 bara, ou lorsque le réacteur à courant entraîné 13 est tempéré à une température comprise entre 100 et 950 °C, ou dans laquelle la méthode est réalisé à une pression comprise entre 0,5 et 10 bara et à une température du réacteur à flux entraîné comprise entre 100 et 950 °C.

**12.** Une méthode pour étudier des procédés chimiques utilisant un réacteur à courant entraîné (13) selon l'une des

## EP 4 534 193 B1

revendications 9 à 11, où le matériau particulaire comprend un catalyseur fluide ou FCC et où la méthode est réalisée avec au moins une alimentation liquide, où le rapport catalyseur/alimentation, appelé rapport cat/alimentation, est dans la fourchette de 1/1 à 100/1, De préférence, le ratio cat/alimentation est de 3/1 à 50/1, et le ratio cat/alimentation est de préférence de 4/1 à 25/1.

13. Une méthode pour étudier les procédés chimiques avec un réacteur à courant entraîné (13) selon l'affirmation 12, où les étapes de la méthode sont effectuées plusieurs fois, au moins un paramètre de procédé étant sélectionné parmi le rapport cat/alimentation, la température, la pression, l'alimentation, la composition de l'alimentation, la pression partielle de l'alimentation, s'il est évaporable, ou la concentration de l'alimentation dans la zone d'entrée du réacteur à courant entraîné, catalyseur, additif est modifié, dans lequel un ensemble de paramètres de processus est généré ; De préférence, la procédure est réalisée au moins trois fois de suite, en changeant le rapport cat/alimentation dans l'ensemble des paramètres du processus.

14. Une méthode pour l'étude de procédés chimiques avec un réacteur dérivé (13) selon l'une des revendications 9 à 13, dans laquelle un ou plusieurs composants réactifs sont sélectionnés parmi le groupe d'huiles pétrolées, huiles, huiles lourdes, gazolues, huiles sous vide, résidus, huiles végétales, graisses, acides gras, triglycérides, lipides, biohuiles, condensats de pyrolyse, huiles hydrothermales, huiles de pyrolyse, huile de tourbe, huile de tourbe, huile de lignine, diesel, naphte, Fonds polymères, huiles de paraffine, cires fondues, solutions sucrées, solutions de glucides, extraits organiques liquides, térébenthine, résines, huiles goudronneuses, poix.

15. Un programme informatique pour contrôler un appareil destiné à l'étude de procédés chimiques au moyen d'un réacteur à courant entraîné (13) possédant les caractéristiques spécifiées dans l'une des revendications 1 à 8, ou un programme informatique pour réaliser une méthode en combinaison avec un appareil comprenant un réacteur à courant entraîné (13) selon l'une des revendications 9 à 14.

**Fig. 1**

# Fig. 2

## Fig. 3

**Fig. 4**

**Fig. 5**

**Fig. 6**

# Fig. 7

**Fig. 8**

Zeit – Durchleitung von Kat u. Feed [s]

**Fig. 9**

Zeit – Durchleitung von Kat u. Feed [s]

**Fig. 10**

Zeit – Durchleitung von Kat u. Feed [s]

**Fig. 11.a**

**Fig. 11.b**

Kat/Oil

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2019020655 A1
- US 6069012 A
- US 7378059 B1
- WO 2021213974 A
- EP 3283209 B1
- WO 2021074407 A1
- WO 2020078952 A1

**In der Beschreibung aufgeführte Nicht-Patentliteratur**

- *Catal. Today*, 2013, vol. 218-219, 107-114